# EUROPÄISCHE PATENTSCHRIFT

(11) **EP 2 106 700 B1**
(45) Veröffentlichungstag und Bekanntmachung des Hinweises auf die Patenterteilung: **04.01.2017**
(21) Anmeldenummer: 09166046.4
(22) Anmeldetag: 03.02.2006
(51) Int. Cl.: A21B 7/00, A21B 1/46, G07F 11/26, G07F 11/58, G07F 9/10, G07F 17/00

(54) **Gebäude und Verfahren zur Lagerung, Behandlung und Ausgabe von Backwaren**
Building and method for storage, processing and dispensing of food products
Bâtiment et méthode pour le stockage, le traitement et la distribution de produits alimentaires

(30) Priorität: 03.02.2005 DE 102005005193
(43) Veröffentlichungstag der Anmeldung: 07.10.2009
(62) Teilanmeldung aus: 06101284.5
(73) Patentinhaber: R. Weiss Verpackungstechnik GmbH & Co. KG, 74564 Crailsheim (DE)
(72) Erfinder: Weiss, Reinald, 91626 Schopfloch (DE)
(74) Vertreter: Schlief, Thomas P.

(56) Entgegenhaltungen:
- EP-A- 1 433 381
- EP-A- 1 617 385
- AU-B2- 553 473
- DE-A1- 10 228 500
- DE-U1- 20 302 346
- DE-U1- 20 318 210
- FR-A- 2 821 524
- GB-A- 2 083 738

## Beschreibung

Die vorliegende Erfindung betrifft ein Gebäude, insbesondere einen Supermarkt o. dgl., sowie ein Verfahren zur Lagerung, Behandlung und Ausgabe von Backwaren nach den Oberbegriffen der unabhängigen Ansprüche.

Der Vertrieb von Lebensmitteln, wie beispielsweise Backwaren, erfolgt in konventioneller Weise über Fachgeschäfte, wie Bäckereien oder im Falle von Fleisch- und Wurstwaren über Metzgereien. In zunehmendem Maß werden aber auch neue Vertriebswege, wie beispielsweise über Supermärkte, erschlossen. Hierbei ergeben sich unterschiedliche Anforderungen. Eine Forderung ist dabei, dass der Vertrieb der Waren möglichst kostengünstig sein muss. Darüber hinaus muss die Ware ansprechend und möglichst frisch sein. Im Hinblick auf die erste Forderung nimmt der Einsatz automatisierter Vorrichtungen zu, da damit kostenaufwändiger Personaleinsatz umgangen wird. Bei der Beurteilung der Kosten ist aber auch der für eine Vorrichtung benötigte Platzbedarf von Bedeutung. Bei modernen Supermärkten wird hierzu beispielsweise eine Kenngröße ermittelt, mit welcher das Verhältnis von Verkaufsfläche zu Umsatz bestimmt und überwacht wird. Ziel ist es dabei, pro bereitgestellter Flächeneinheit Verkaufsfläche einen möglichst hohen Umsatz zu erzielen.

Weiterhin von Bedeutung ist auch eine ansprechende und lebensmitteltechnisch unbedenkliche Bereithaltung und Abgabe der Lebensmittel. Bekannt sind hierzu beispielsweise Backöfen, die in Verkaufsräumen von Supermärkten aufgestellt sind. Diese sind vom Verkaufspersonal zu befüllen und zu entleeren.

Die DE 203 18 210 U1 offenbart einen Aufbackofen zum Aufbacken von Lebensmitteln mit einer Aufgabeeinrichtung mit einer intermittierend antreibbaren Rüttelplatte zum Vereinzeln von Backwaren, einem Durchlaufbackofen und einer Ausgaberutsche eines Ausfuhrbehälters, wobei der Ausfuhrbehälter an der Außenseite eines Gebäudes vorgesehen sein kann.

In der EP 2 821 524 A1 ist ein Aufbackofen für Baguettes beschrieben, bei dem Baguettes zu einem umlaufenden Trägerelement rutschen, dann einen Durchlaufbackofen passieren und anschließend von einem umlaufenden Trägerelement zu einem Ausgabefach transportiert werden.

Die DE 203 02 346 U1 beschreibt einen Backofen in einem Gehäuse, der ein durchgehendes Transportband mit mehreren Trägerelementen aufweist, wobei dieses Transportband auch einen Backofen durchläuft. Nach dem Backvorgang werden die Backwaren von den Trägerelementen auf ein Transportband abgeworfen und gelangen von dort in einen Ausgabetrichter.

In der DE 102 28 500 A1 ist ein Backofen mit mehreren Modulen beschrieben, die in einem Basisgehäusemodul oder daraus abgeleiteten Sekundärgehäusemodulen untergebracht sind. Die Module umfassen ein automatisches Zuführmodul, ein manuelles Zuführmodul, ein Ofenmodul, ein Verpackungsmodul und eine Ausgabeeinrichtung.

Die GB 2 083 738 A offenbart einen Ofen zum Backen von Biskuits mit einem Einfuhr- und einer Ausfuhröffnung, die mittels eines Transportbandes verbunden sind, das durch einen Ofenraum führt. Das Transportband fördert eine Mehrzahl von Tabletts, auf denen Biskuits aufgelegt sind. Das Transportband kann hierbei durch eine Wandöffnung in einen Verkaufsraum hineinragen, so dass die Ausfuhröffnung in diesem Verkaufsraum angeordnet ist und Kunden dort die Biskuits entnehmen können.

Aufgabe der vorliegenden Erfindung ist es, Einrichtungen und Verfahren bereitzustellen, mit denen Backwaren zuverlässig, kostengünstig, in lebensmitteltechnisch einwandfreier Weise und zudem möglichst ansprechend für die Kunden bereitzustellen sind.

Gelöst wird die oben genannte Aufgabe durch eine Einrichtung bzw. Anordnung sowie ein entsprechendes Verfahren gemäß den Merkmalen der unabhängigen Ansprüche. Durch die erfindungsgemäße Aufteilung der Vorrichtung zu beiden Seiten einer Wand kann ein erheblicher Umfang der Vorrichtung aus dem Verkaufsbereich ausgelagert werden. Insbesondere vorteilhaft ist dies bei solchen Abschnitten, die während des Betriebes im Verkaufsbereich störend wirken, beispielsweise indem sie zu Verunreinigungen, Wärme-oder Lärmentwicklungen beitragen. Durch die erfindungsgemäße Einrichtung wird damit gleichzeitig der Vorteil einer Reduzierung der benötigten Fläche im Verkaufsbereich bei gleichzeitiger Abstellung gravierender Störungen erreicht.

Die Verbindung zwischen den Abschnitten erfolgt über die im Trennmittel vorgesehene Verbindungsöffnung und bleibt vom Verkaufsbereich aus vorzugsweise unsichtbar, wenn sie gemäß einer bevorzugten Ausführungsform kleiner ist als die vom verkaufsbereichsseitig aufgestellten Abschnitt überdeckte Fläche des bautechnischen Trennmittels. Damit entsteht trotz der Verbindungsöffnung in der Wand für die Kunden kein nachteiliger optischer Eindruck. In bestimmten Fällen, wie etwa der Anordnung einer erfindungsgemäßen Vorrichtung in einer Ecke eines Verkaufsbereichs, kann es auch ausreichend sein, wenn nur ein Teil der Verbindungsöffnung durch den verkaufsbereichsseitigen Abschnitt überdeckt ist.

Erfindungsgemäß sind drei Abschnitte vorgesehen. Hierbei dient ein erster Abschnitt zur Bevorratung/Lagerung bzw. Aufnahme/Beschickung, ein zweiter Abschnitt zur Behandlung (z.B. dem Backen) und ein dritter Abschnitt zur Lagerung bzw. Ausgabe der Backwaren.

Es bringt einen erheblichen Vorteil mit sich, wenn wenigstens zwei unabhängig voneinander steuerbare Fördereinrichtungen vorgesehen sind. Auf diese Weise wird die Vorrichtung in ihrer Flexibilität wesentlich verbessert. Mit steigender Anzahl unabhängiger Fördereinrichtungen steigt auch die Flexibilität der Vorrichtung. So ist es beispielsweise mit zwei Fördereinrichtungen möglich, unterschiedliche Arten von Backwaren nach Bedarf zu behandeln und gezielt auszugeben. Führt beispielsweise eine erste Fördereinrichtung, wie etwa ein Förderband, durch den Lagerabschnitt und ein zweites Förderband durch den Behandlungs- und Ausgabeabschnitt, so können an der Schnittstelle zwischen Lager- und Behandlungsabschnitt Backwaren je nach gewünschter Art und zum gewünschten Zeitpunkt vom ersten Förderband an das durch den Behandlungsabschnitt führende zweite Förderband abgegeben, dort behandelt und schließlich an der Ausgabe ausgegeben werden.

Gemäß der Erfindung weist jede Fördereinrichtung eine Mehrzahl von Trägerelementen auf, um die Backwaren aufzunehmen. So kann vorgesehen sein, dass unterschiedliche Backwaren in unterschiedlichen Trägerelementen transportiert werden. Kostensparend ist es, die Trägerelemente einheitlich bzw. gleichartig auszubilden und so zu gestalten, dass sie geeignet sind, alle in Frage kommenden Arten von Backwaren aufzunehmen.

Bei großen Durchsatzmengen bietet es sich darüber hinaus an, die Trägerelemente länglich zu gestalten und quer zur Durchlaufrichtung anzuordnen, so dass sie gleichzeitig mehrere Backwaren nebeneinander aufnehmen können, s. hierzu auch die Ausführungen weiter unten.

Erfindungsgemäß setzt man eine Mehrzahl von Trägerelementen ein wobei jedem Trägerelement wenigstens eine Information zugeordnet ist, insbesondere eine Information über Laufzeit, Art der Beladung oder den momentanen Standort. Auch die Erfassung von Be- und Entladezeiten ist bei manchen Anwendungen sinnvoll. Hierdurch wird eine Verwaltung der Trägerelemente wesentlich erleichtert, indem beispielsweise das am nächsten am Ausgabeort liegende Trägerelement mit dem angeforderten Backwarentyp ermittelt und dorthin transportiert werden kann. Bei anderen Kriterien kann beispielsweise darauf geachtet werden, dass die am längsten in der Ausgabeeinrichtung verweilende Backware der angeforderten Art zuerst ausgegeben wird. Daneben erlaubt es selbstverständlich auch eine Ermittlung des genau angeforderten Backwarentyps.

Für die Zubereitung von Backwaren ist erfindungsgemäß der zweite Abschnitt ein Durchlaufbackofen. Derartige Backöfen sind besonders zuverlässig, wartungsarm und weisen bei Bedarf gleichzeitig eine ausreichend hohe Kapazität auf. Daneben ist es bei Durchlaufbacköfen besonders einfach, diese automatisiert zu be- und entladen.

Bei besonders kostengünstigen Ausführungsformen einer erfindungsgemäßen Vorrichtung ist es vorteilhaft, diese manuell zu beschicken. Dies kann beispielsweise in Form eines manuell beschickbaren Backofens realisiert werden. Hierdurch lässt sich der vorrichtungstechnische Aufwand für die ansonsten erforderlichen Automatisierungseinrichtungen einsparen. Bei anderen Anwendungen, die eine besonders hohe Automatisierung und damit Personaleinsparung zum Ziel haben, kann aber eine automatische Beschickung der Vorrichtung bzw. des Backofens vorgesehen sein.

Besonders vorteilhaft ist eine Vorrichtung bzw. ein entsprechendes Verfahren, bei der bzw. dem ein als Aufgabeeinrichtung ausgebildeter erster Abschnitt verfahrbare Trägerelemente aufweist, auf die jeweils mehrere Kleinbackwaren in vereinzelter Form - vorzugsweise seitens einer Bedienperson - auflegbar sind bzw. aufgelegt werden. Mittels dieser Ausgestaltung wird ein äußerst zuverlässiger Betrieb der erfindungsgemäßen Vorrichtung mit einem besonders geringen Personalaufwand für den laufenden Betrieb erreicht. Eine willkürliche Lage der Kleinbackwaren, wie sie beispielsweise durch das übliche, aus dem Stand der Technik bekannte Schütten in einen Sammelbehälter entsteht und die ein nachträgliches Vereinzeln der Backwaren innerhalb der Vorrichtung erforderlich macht, wird hierdurch effektiv vermieden, ebenso wie die bei derartigen nachträglichen Vereinzelungen häufig auftretenden Störungen, die beispielsweise durch anhaftende, herunterfallende oder blockierende Kleinbackwaren verursacht werden.

Vorteilhaft ist eine schon oben erwähnte Ausführungsform, die mit einer Aufgabeeinrichtung mit verfahrbaren Trägerelementen versehen ist, um gleichzeitig eine Mehrzahl von zumindest Kleinbackwaren, insbesondere Brötchen, Laugenbrezeln oder -stangen o. dgl., in vereinzelter Form durch Auflegen seitens einer Bedienperson aufnehmen zu können. Damit ist es möglich, die Brötchen bzw. Kleinbackwaren entlang der Längsausrichtung der vorzugsweise länglich ausgebildeten und sich vorteilhafterweise über die Breite der Aufgabeeinrichtung erstreckenden Trägerelemente nebeneinander und insbesondere in vereinzelter Form anzuordnen. Die Trägerelemente können dann an eine Fördereinrichtung, beispielsweise in Form eines Förderbandes oder einer Förderkette angeschlossen durch die Vorrichtung transportiert werden.

Der besondere Vorteil einer derart ausgebildeten Vorrichtung liegt darin, dass die Backwaren bei der Aufgabe in die Vorrichtung bereits vereinzelt sind und während des gesamten Transports durch die Vorrichtung in kontrollierter Weise transportiert werden.

Für einen sicheren Betrieb und eine einfache Handhabung der erfindungsgemäßen Vorrichtung ist es vorteilhaft, wenn die Aufgabeeinrichtung eine Beladestelle aufweist, durch die wenigstens ein Trägerelement zur Bestückung erreichbar ist. Für die Sicherheit des Bedienpersonals ist es beispielsweise erforderlich, umlaufende Förderketten und Trägerelemente in einem abgeschlossenen Bereich anzuordnen. Hierdurch sind diese vor versehentlichem Hineingreifen geschützt und die erforderliche Arbeitssicherheit ist gewährleistet. Um dennoch eine rasche und bequeme Bestückung der Trägerelemente zu erreichen, weist die erfindungsgemäße Vorrichtung vorteilhafterweise eine verschließbare Öffnung auf, durch die wenigstens ein Trägerelement erreichbar ist. Durch diese Öffnung können dann die Brötchen bzw. Backwaren auf das Trägerelement aufgegeben und danach innerhalb der Vorrichtung weiterverarbeitet werden.

Besonders vorteilhaft ist es hierbei, wenn an der Beladestelle Anzeige- und/oder Eingabeeinrichtungen zur Vorgabe und/oder Erfassung der Bestückung der Trägerelemente angeordnet sind. Eine solche Anzeige- und/oder Eingabeeinrichtung kann an eine zentrale Steuereinrichtung angeschlossen werden, um dem Bediener bei der Bestückung vorzugeben, welche Art von Backwaren in welcher Menge zu bestücken sind.

In umgekehrter Richtung kann durch eine Eingabeeinrichtung von einem Bediener die Art der von ihm bestückten Backwaren an die Steuereinrichtung übermittelt werden. Die Anordnung der Anzeige- und/oder Eingabeeinrichtung erfolgt vorzugsweise in der Nähe der Beladestelle, so dass ein Bediener diese leicht ablesen bzw. zur Vornahme von Eingaben erreichen kann.

Alle Vorgaben oder Erfassungen können sich wahlweise auf einzelne Trägerelemente oder eine Gruppe von Trägerelementen beziehen. Besonders zweckmäßig ist es, wenn sich die Vorgaben oder Erfassungen auf genau die Gruppen von Trägerelementen beziehen, welche an der Beladestelle zur Bestückung bereitstehen. Dann muss die Vorgabe oder Erfassung nur einmal für alle Trägerelemente erfolgen.

Als besonders bevorzugte Ausführungsform der Erfindung hat sich bewährt, wenn die Trägerelemente zur Aufnahme von Kleinbackwaren, wie etwa Brötchen, und Großbackwaren, wie etwa Broten einschließlich Baguettebroten, ausgebildet sind. So ist es beispielsweise möglich, die Trägerelemente als längliche aus Draht gefertigte Gitterkörbe auszubilden. In diese Gitterkörbe können dann wahlweise Brötchen, Brote oder auch Baguettebrote aufgelegt werden. Gemeinsam ist allen Backwaren hierbei die bevorzugte Ausrichtung entlang der Längsachse der Gitterkörbe, die während der nachfolgenden Verarbeitung eine sichere und störungsfreie Funktion der gesamten Vorrichtung gewährleistet. Vorzugsweise werden die Backwaren hierbei einreihig auf ihren jeweiligen Trägerelementen aufgelegt.

Gemäß einer vorteilhaften Ausgestaltung sind die Trägerelemente für Kleinbackwaren einerseits und für Großbackwaren andererseits unterschiedlich breit ausgebildet, da diese zumeist selbst unterschiedliche Breiten aufweisen. Dadurch kann eine optimierte Lage der verschiedenen Backwaren auf den jeweiligen Trägerelementen erreicht werden.

Um Störungen, beispielsweise durch herabfallende Backwaren, effektiv zu verhindern, hat es sich als besonders vorteilhaft erwiesen, wenn eine Antriebseinrichtung vorgesehen ist, welche die Trägerelemente zwischen wenigstens einer Transportstellung und einer Be- bzw. Entladestelle bewegt. Bildet man die Trägerelemente beispielsweise mit einem Querschnitt aus, der einem rechtwinkligen und gleichzeitig nach oben offenem "V" entspricht, so sind die darin befindlichen Waren während des Transports besonders sicher, wenn die Spitze des V-förmigen Querschnittes nach unten zeigt. Für die Be- bzw. Entladung ist es dann wieder vorteilhaft, wenn eine der Seiten des V senkrecht bzw. vertikal steht, um die Backwaren auf die horizontale Fläche auf- bzw. abschieben zu können. Hierzu können entsprechende Führungen an den Stirnseiten der Trägerelemente vorgesehen sein.

Des weiteren ist es vorteilhaft, die erfindungsgemäße Vorrichtung so auszubilden, dass Fördereinrichtungen vorgesehen sind, welche die in der Längsrichtung der Trägerelemente angeordneten Backwaren unter Beibehaltung der Relativlage zueinander durch die gesamte Vorrichtung bis zum Kundenabruf an der Ausgabeeinrichtung fördern. Ziel ist es, die bei der manuellen Aufgabe erreichte kontrollierte Vereinzelung der Backwaren durch die gesamte Vorrichtung beizubehalten. Übergaben der Backwaren innerhalb der Vorrichtung, beispielsweise von einer Fördereinrichtung zur nächsten, erfolgen aus diesem Grund etwa durch horizontal wirkende Seitenschieber oder durch ein Abkippen der Trägerelemente um ihre Längsachse. Bei allen Transportbewegungen behalten jedoch die in jeweils einem Trägerelement benachbarten Backwaren stets ihre Relativbewegung zueinander bei.

Wie zuvor schon erwähnt, schlägt die Erfindung für den Betrieb der zuvor beschriebenen Vorrichtung darüber hinaus ein Verfahren zur Lagerung, Behandlung und Ausgabe von - vorzugsweise vorgebackenen - Backwaren, vor, bei dem die Backwaren in einem Durchlaufbackofen gebacken und mittels einer Ausgabeeinrichtung ausgegeben werden. Das erfindungsgemäße Verfahren zeichnet sich dadurch aus, dass die Backwaren bei ihrer Aufgabe bzw. zur Lagerung von einer Bedienperson einzeln in verfahrbare Trägerelemente eingelegt werden, welche zur Förderung der Backwaren zum Backofen dienen. Hierdurch und auch durch die vorteilhafte Ausführung der Beibehaltung der Relativlage von Backwaren jeweils eines Trägerelements ergeben sich die zuvor beschriebenen Vorteile, da keine nachträgliche maschinelle Vereinzelung der Backwaren erforderlich ist.

Als besonders vorteilhaft hat es sich bei dem erfindungsgemäßen Verfahren erwiesen, wenn an der Beladestelle gleichzeitig eine Mehrzahl von Trägerelementen bereitgestellt wird, so dass ein Bediener beispielsweise gleichzeitig drei, vier oder fünf Trägerelemente beladen kann, ohne nach Befüllung eines Trägerelements das nächste vorfahren zu müssen.

Besonders günstig ist es dabei, wenn jedes der mehreren, bereitgestellten Trägerelemente mit jeweils gleichen Backwaren beladen wird. Dabei kann ein Bediener beispielsweise fünf gleichzeitig - vorzugsweise übereinander-bereitgestellte Trägerelemente mit einer Sorte von Backwaren bestücken, z.B. Brötchen. Nach dem Beladen dieser fünf Trägerelemente muss die Vorrichtung lediglich einmal weiterverfahren werden, um die nächsten fünf leeren Trägerelemente der Bedienperson zu präsentieren. Gleichzeitig muss nur einmal für diese fünf beladenen Trägerelemente die Art der bestückten Backwaren an die Maschine weitergemeldet werden, sofern dies für eine Steuerung erforderlich ist. Dies ermöglicht eine besonders effiziente Arbeitsweise, die mit steigender Anzahl der zu einer Mehrzahl zusammengefasster Trägerelemente noch weiter verbesserbar ist.

Bei einer zweiten Sorte von Backwaren, z.B. Broten, kann die Anzahl der von der Bedienperson zu bestückenden Trägerelemente unterschiedlich sein, da diese Trägerelemente einen größeren, z.B. vertikalen Abstand voneinander aufweisen können. Dies ist insbesondere dann der Fall, wenn diese zweite Sorte von Backwaren selbst eine größere Höhe aufweisen und dementsprechend die zugeordneten Trägerelemente weiter beabstandet sind und somit an der Beladestelle in geringerer Anzahl vorgefahren werden.

Die Erfindung sieht vor, dass ein Abschnitt die dem Behandlungsabschnitt vorgeschaltete, schon erwähnte Aufgabeeinrichtung ist. Damit ist es dann beispielsweise möglich, bei einer aus drei Abschnitten bestehenden Vorrichtung Backwaren in die Aufgabeeinrichtung einzubringen, dort zu lagern und bei Bedarf zur Behandlung und Ausgabe abzurufen. Ein sich daran anschließender Behandlungsabschnitt in Form eines Backofens bereitet die Backwaren anschließend zu und gibt sie danach an einen dritten Abschnitt in Form einer Ausgabeeinrichtung ab. In der Ausgabeeinrichtung können die fertig behandelten, d.h. die zubereiteten Backwaren, dann nochmals zwischengespeichert oder direkt ausgegeben werden.

Es ist bei Vorrichtungen mit besonders hoher Kapazität und besonders hoher Verkaufsleistung sinnvoll, dass eine Vorrichtung gleichzeitig mehrere Ausgabemöglichkeiten aufweist. Auf diese Weise können beispielsweise zwei Kunden gleichzeitig Waren aus den verschiedenen Ausgaben abrufen, wodurch die Bildung langer Warteschlangen vermieden wird.

Um Ungenauigkeiten, wie beispielsweise Laufzeittoleranzen, auszugleichen, hat es sich als besonders vorteilhaft erwiesen, wenn zwischen einer Fördereinrichtung am bzw. durch den Backofen und einer Fördereinrichtung an der Ausgabeeinrichtung ein Zwischenspeicher vorgesehen ist. Gelangt etwa eine Backware nur mit einer Zeittoleranz von beispielsweise +/- 5 Sekunden zu einer vorgesehenen Übergabestelle, wäre es ohne Zwischenspeicher erforderlich, die dort vorgesehene Aufnahme bzw. das dort zur Aufnahme vorgesehene Trägerelement für die gesamte Zeitdauer dieses Zeitfensters dort bereitzuhalten. In dieser Zeit kann die wartende Fördereinrichtung aber keine weiteren Aufgaben ausführen. Sieht man nun aber einen Zwischenspeicher vor, der die Backware von der Fördereinrichtung des Backofens übernimmt, kann die Fördereinrichtung der Ausgabeeinrichtung in dieser Zeit weiterhin ihre Funktion ausführen. Lediglich zur Übergabe der zwischenzeitlich im Zwischenspeicher angekommenen Backware muss die Fördereinrichtung der Ausgabeeinrichtung ein leeres Trägerelement kurzzeitig zur Übergabestelle bewegen, wo diese dann stattfindet.

Eine vorteilhafte Weiterbildung der Erfindung sieht vor, dass dabei im Zwischenspeicher Speicherraum für mehrere Backwaren vorgesehen ist. Bildet man beispielsweise die Trägerelemente länglich aus, so dass auf einem Trägerelement gleichzeitig mehrere Backwaren, wie etwa Schnittbrötchen, Platz finden, ist es sinnvoll, diese Backwaren so lange im Zwischenspeicher anzusammeln, bis ein Trägerelement ganz oder zumindest annähernd befüllt werden kann. Dazu kann der Zwischenspeicher auch Speicherraum für mehrere verschiedene Arten von Backwaren aufweisen, die dann jeweils sortiert an bereitgestellte Trägerelemente übergeben werden.

Die Ausgabeeinrichtung ist im Weiteren vorteilhafterweise dadurch gekennzeichnet, dass ein manuelles Ausgabefach oder eine Befüllvorrichtung, insbesondere eine Befüllvorrichtung zur Befüllung von Tüten oder Kartonagen, vorgesehen ist. Bei der Ausgabe in ein manuelles Ausgabefach handelt es sich um eine konstruktiv besonders einfache und preiswerte Ausführungsform. Aus hygienischen Gründen und für die Kunden ansprechender ist dagegen eine Befüllvorrichtung, welche die angeforderten Backwaren, wie beispielsweise Brötchen, direkt in Tüten oder Kartonagen verpackt.

Um die Erkennung der ausgegebenen Backwaren zu erleichtern, hat es sich zudem als besonders vorteilhaft erwiesen, wenn an der Ausgabeeinrichtung eine Vorrichtung zur Erzeugung von Informationsträgern, insbesondere von Etiketten, Barcodes oder Aufdrucken, vorgesehen ist. Diese Informationsträger können dann beispielsweise an den Kassen von Supermärkten automatisch von Kassensystemen oder manuell von Kassierern eingelesen werden. Eine zeitaufwändig manuelle Erfassung der Waren, beispielsweise durch Prüfen der Warenart und Nachzählen bzw. Nachwiegen, entfällt damit. Zur Erzeugung der Informationsträger können Laser-, Tintenstrahl- oder Thermotransferdrucker zur Anwendung kommen. Die Informationen können direkt auf Verpackungen, wie beispielsweise Tüten oder Kartonagen, oder aber auf Etiketten aufgedruckt werden. Selbstverständlich ist es auch denkbar, andere Informationsträger, wie elektronische Datenträger, zu erzeugen und auf der Verpackung der Ware anzubringen bzw. separat auszugeben und vom Kunden aufbringen zu lassen.

Für einen wirtschaftlichen Betrieb der erfindungsgemäßen Vorrichtung hat es sich als besonders vorteilhaft erwiesen, wenn eine Steuerungsvorrichtung, insbesondere eine elektronische Steuerung, vorgesehen ist, die Funktionen in einem oder mehreren der Abschnitte steuert. Insbesondere programmierbare elektronische Steuerungen können bei entsprechender Programmierung auch komplexe Aufgaben mit höchster Präzision und Zuverlässigkeit erfüllen. Hierdurch ist es möglich, Personal in erheblichem Umfang einzusparen und gleichzeitig die Genauigkeit, mit der die Funktionen gesteuert werden, deutlich zu erhöhen.

Eine mögliche Funktion ist dabei die Überwachung und Steuerung der Trägerelemente. Dazu ist die Steuerungseinrichtung vorteilhafterweise mit einer Verarbeitungseinrichtung zur Verarbeitung der den Trägerelementen zugeordneten Informationen ausgestattet. Eine solche Verarbeitungseinrichtung kann beispielsweise aus einem Rechnersystem und einer zugehörigen Software bestehen, mit deren Hilfe die Art der Beladung der Trägerelemente, deren Ort innerhalb der Vorrichtung, deren Behandlungszustand und Aufenthaltsdauer verfolgt werden. Bei einem Warenabruf oder einer Überschreitung entsprechender Zeitgrenzen kann die Steuerungseinrichtung dann entsprechende Aktionen der Fördereinrichtungen bzw. der gesamten Vorrichtung veranlassen. Wie bereits zuvor angedeutet, können je nach Wunsch unterschiedliche Kriterien definiert werden. So kann ein Steuerkriterium vorsehen, dass schnellstmöglich verfügbare Trägerelement der Ausgabeeinrichtung zuzuführen oder ein anderes Steuerkriterium das Trägerelement mit der Ware der gewünschten Art, welche die längste Verweildauer in der Vorrichtung aufweist, auszugeben. Noch ein anderes Steuerkriterium kann nach dem Überschreiten einer Gesamtverweildauer den Austausch bestimmter oder aller betreffenden Waren vorsehen. Dies sind selbstverständlich nur einige Beispiele für eine Vielzahl möglicher Steuerungskriterien.

Zur besseren Verarbeitung der Informationen ist an der Steuerungseinrichtung darüber hinaus erfindungsgemäß eine Speichereinrichtung zur Speicherung der den Trägerelementen zugeordneten Informationen vorgesehen. Vorteilhafterweise werden dazu bereits bei der Aufgabeeinrichtung derartige Informationen in der Speichereinrichtung hinterlegt. Diese Informationen können beispielsweise Art der Stückware, Uhrzeit der Aufgabe der Ware, Nummer oder Bezeichnung des beschickten Trägerelementes und ähnliches enthalten. Darüber hinaus können aber auch im Verlauf der Verarbeitung der Ware neugenerierte Informationen hinzukommen. Wird beispielsweise eine Ware von einem Trägerelement einer ersten Fördereinrichtung an ein Trägerelement einer zweiten Fördereinrichtung übergeben, so ist entsprechend der eintretende Wechsel der Bezeichnungen des Trägerelementes zu protokollieren. Erfolgt beispielsweise am Backofen eine Übergabe von einem bezeichneten Trägerelement an ein unbezeichnetes Endlosband, kann es sinnvoll sein, den genauen Übergabezeitpunkt zu protokollieren, um daraus in Verbindung mit der eingestellten Geschwindigkeit des Förderbandes und dessen Förderlänge zu jedem Zeitpunkt die aktuelle Lage der Ware oder den Abgabezeitpunkt zu berechnen.

Vorteilhafterweise weist die Steuerungseinrichtung dazu eine Zeiterfassungseinrichtung zur zeitlichen Überwachung des Durchlaufs der Trägerelemente auf.

Für eine Optimierung der Verfügbarkeit der angebotenen Backwaren bzw. eine Vermeidung oder Minimierung von Ausschussware ist es besonders vorteilhaft, wenn die Steuerungseinrichtung mit einem Programm zur Verbrauchsüberwachung und/oder -analyse ausgestattet ist. Dazu ist es besonders vorteilhaft, wenn beispielsweise über einfache Zählwerke oder in elektronischer Form von der Steuerungseinrichtung die Mengen der einzelnen umgesetzten Warenarten ermittelt werden. Dies kann in beliebigen Zeiteinheiten erfolgen, wie beispielsweise monatsweise, wochenweise, tageweise, stundenweise oder auch in kleineren Zeitinkrementen. Je kürzer dabei die Zeitdauer ist, während der eine behandelte Backware als frisch anzusehen ist, und je länger die zur Zubereitung erforderliche Zeitdauer ist, um so effektiver wirkt sich eine solche Verbrauchsanalyse auf die Wirtschaftlichkeit einer erfindungsgemäßen Vorrichtung aus. So kann beispielsweise anhand der über einen gewissen Zeitraum ermittelten Erfahrungswerte für jeden Backwarentyp ein durchschnittlicher Bedarf ermittelt werden. Hieraus kann dann ein Tagesbedarf abgeleitet werden, der als Grundlage für die Bestellmengen der täglich frisch zu liefernden Ware bildet. Ergibt die Analyse beispielsweise, dass ein Produkt A regelmäßig an einem ersten Wochentag 300-fach verkauft wird und an einem zweiten Wochentag 500-fach, so kann die am Vortag aufzugebende Bestellung für diesen Werktag entsprechend angepasst werden. Damit ist sichergestellt, dass in der Regel die Ware in ausreichendem Maß zur Verfügung steht und entweder gar kein oder nur sehr geringer Ausschuss anfällt. Des weiteren ist es aber auch möglich, den Tagesbedarf über den Tag verteilt exakter abzuschätzen und zu decken und den im Tagesverlauf schwankenden Bedarf zu analysieren. Ergibt eine solche Analyse beispielsweise, dass ein Produkt A zu einer nachfrageschwachen Zeit, beispielsweise zwischen 13 und 16 Uhr, nur zehn mal abgerufen wird, so macht es keinen Sinn, dieses Produkt A beispielsweise mehr als zwei- oder dreimal fertig zubereitet in einer Ausgabeeinrichtung vorzuhalten. Hierdurch wird erreicht, dass das Produkt fortlaufend frisch zubereitet bereitsteht. Steigt die Nachfrage hingegen beispielsweise ab 17 Uhr sprunghaft auf beispielsweise 200 Einheiten pro Stunde an, so kann die entsprechende Produktion mit einem zeitlichen Vorlauf von beispielsweise 15 Minuten bereits um 16:45 Uhr einsetzen und rechtzeitig bereitstehen. Besonders geeignet ist in diesem Zusammenhang der Einsatz von selbstlernenden Programmen, die in iterativen Optimierungsschritten die produzierten Mengen im Lauf der Zeit immer genauer an den tatsächlichen Bedarf annähern, ohne dass ein Bediener hierzu erforderlich ist.

Neben der schwankenden Nachfrage nach einem einzelnen Produkt, kann auf diese Weise auch die schwankende Nachfrage zwischen zwei oder mehr Produkten berücksichtigt werden. So kann beispielsweise beim Vorliegen einer Hauptnachfragezeit am Morgen und einer weiteren Hauptnachfragezeit am Abend berücksichtigt werden, wenn morgens überwiegend das Produkt A und nur wenig das Produkt B nachgefragt wird, wohingegen abends nur wenig vom Produkt A und überwiegend das Produkt B nachgefragt wird. Mit einer solchen Verbrauchsüberwachung und -analyse, die vorzugsweise ebenfalls selbstlernend, d.h. dynamisch, ausgelegt ist, kann damit die produzierte bzw. vorproduzierte Menge an Backwaren in der für jeden einzelnen Verkaufsstandort individuell optimierten Weise gesteuert werden.

Für die Bedienung einer erfindungsgemäßen Vorrichtung ist es darüber hinaus vorteilhaft, wenn die Steuerungseinrichtung Ausgabemittel zur Ausgabe oder Anzeige eines vorhandenen Vorrats aufweist. Die Anzeige des Vorrats kann beispielsweise in absoluten Zahlen oder in Form einer verbleibenden Restdauer für die jeweiligen Backwarenarten erfolgen. Ein Bediener kann dann erkennen, wie viel Stück eines bestimmten Produktes noch vorhanden sind bzw. wie lange der vorhandene Vorrat noch ausreichen wird. Alternativ kann auch eine Signaleinrichtung im Verkaufsraum angeordnet sein, welche beispielsweise ein optisches oder akustisches Signal ausgibt, wenn Wartungs- oder Bestückungstätigkeiten an der Vorrichtung erforderlich sind. Diese Signaleinrichtung ist dabei vorteilhafterweise an eine bzw. die Steuerungseinrichtung angebunden.

Da auch Energiekosten einen signifikanten Anteil an den Betriebskosten einer erfindungsgemäßen Vorrichtung ausmachen, ist es besonders günstig, wenn die Steuerungseinrichtung mit dem Backofen verbunden ist, um daran angeordnete Heizvorrichtungen zeitweise still zu setzen. Damit kann bei längeren nachfragelosen bzw. nachfragearmen Zeiten der Energieverbrauch der Vorrichtung deutlich gesenkt werden.

Eine andere vorteilhafte Ausgestaltung der Erfindung sieht vor, dass zumindest die Förderrichtung der Fördereinrichtung der Ausgabeeinrichtung von der Steuerungseinrichtung wahlweise steuerbar ist. Besteht die Fördereinrichtung beispielsweise aus einer Förderkette und befindet sich das abgerufene Produkt auf einem Trägerelement, welches die Ausgabestelle gerade passiert hat, so wäre es bei einer unidirektionalen Bewegung erforderlich, das Trägerelement einen kompletten Durchlauf ausführen zu lassen. Hat die Steuerungseinrichtung nun aber die Möglichkeit, eine Richtungsumkehr der Trägerelemente zu veranlassen, so kann sie zunächst feststellen, in welcher Laufrichtung das Trägerelement die kürzeste Laufzeit bis zur Ausgabestelle benötigt und dann die entsprechende Bewegung des Trägerelements veranlassen.

Vorgenannte Aspekte zu den Steuerungsmöglichkeiten der Vorrichtung können auch als separate Erfindungsaspekte angesehen werden, sind also nicht auf die erfindungsgemäßen Lösungen entsprechend der unabhängigen Ansprüche beschränkt.

Zur Erleichterung der Bedienung und zur Einsparung von Bedienzeit ist es besonders vorteilhaft, wenn Mittel zum automatisierten Entleeren wenigstens eines Abschnittes vorgesehen sind. So ist es beispielsweise bei Geschäftsschluss erforderlich, die unfertigen oder halbfertigen Backwaren aus der Aufgabeeinrichtung zu entnehmen. Anstatt dies manuell durchzuführen, kann an der Aufgabeeinrichtung eine Öffnung vorgesehen sein, an der diese nach entsprechender Bedienung automatisch alle noch in der zugehörigen Fördereinrichtung befindlichen Backwaren ausgibt. Diese können dann beispielsweise in einem Kühlraum bis zum nächsten Tag verwahrt und dann erneut aufgegeben werden. Gleiches gilt auch für Fertigprodukte, die sich bei Ladenschluss noch in der Fördereinrichtung oder sonstigen Speichereinrichtungen der Ausgabeeinrichtung befinden. Hierbei ist es dann wahlweise möglich, die Ausgabe über den üblicherweise vorgesehenen Ausgabeweg oder ebenfalls über eine separate Sammelausgabe vorzusehen.

Neben der Entleerung der Vorrichtung ist vorteilhafterweise vorgesehen, dass eine Reinigungseinrichtung zumindest die Trägerelemente reinigt. Dabei kann die Reinigungseinrichtung so ausgelegt sein, dass sie vor ihr zum Stillstand kommende leere Trägerelemente oder vorbeifahrende leere Trägerelemente einzeln reinigt. Dies kann durch Druckluft oder Bürsten geschehen. Eine andere mögliche Ausführungsform sieht vor, dass die Reinigungsvorrichtung erst nach der kompletten Entleerung des zu reinigenden Abschnitts aktiviert wird und dann sämtliche Trägerelemente reinigt. Eine solche Reinigung kann auch wieder automatisiert werden und beispielsweise während der Nachtzeiten erfolgen. Bei der Durchführung von Reinigungstätigkeiten an Abschnitten ohne Backwaren ist es auch möglich, Reinigungsflüssigkeit bzw. Wasser in Strahlform einzusetzen.

Für die Haltbarkeit der Backwaren hat es sich als besonders vorteilhaft erwiesen, wenn wenigstens ein Abschnitt klimatisiert ist. So ist es in der Regel vorteilhaft, die unbehandelten oder halbfertigen Backwaren zu kühlen, wohingegen bei fertigbehandelten Produkten, wie beispielsweise Backwaren, eine Trocknung bzw. ein Nachbacken sinnvoll sein kann. Demzufolge kann eine Klimatisierung je nach Bedarf in einer Kühlung, Erwärmung, Befeuchtung oder Entfeuchtung bestehen.

Zur besonders schnellen Ausgabe verschiedener Backwarentypen hat es sich als vorteilhaft erwiesen, wenn die Ausgabeeinrichtung je Produkt ein Ausgabeband aufweist. Während beispielsweise verschiedene Backwarentypen mittels einer einzigen Fördereinrichtung zur Ausgabeeinrichtung hin oder innerhalb derer befördert werden, ist es mit den einzelnen Ausgabebändern möglich, diese wieder nach Backwarenart getrennt zu sortieren. Der Vorteil liegt in der Zeitersparnis, da bei einer Anforderung eines Produktes A nur das mit dem Produkt A bestückte Ausgabeband in Gang gesetzt und ausschließlich ein Produkt des gewünschten Typs gefördert wird.

Bei besonders großen Unterschieden in der angeforderten Stückzahl oder bei besonders großen Unterschieden hinsichtlich der geometrischen Abmessung der Produkte ist es vorteilhaft, wenn die Ausgabeeinrichtung je Produkt eine Ausgabestelle aufweist. So kann beispielsweise eine Ausgabestelle hinsichtlich der Ausgabe von länglichem Baguettebrot optimiert werden, wohingegen eine andere Ausgabestelle auf die geometrischen Abmessungen von Schnittbrötchen hin optimiert ausgelegt ist.

Zur möglichst weitgehenden Automatisierung der erfindungsgemäßen Vorrichtung kann vorteilhafterweise vorgesehen sein, dass eine elektronische Eingabeeinrichtung zur Eingabe der gewünschten Produktart und Menge vorgesehen ist. Im einfachsten Fall kann dies durch mehrmaliges Betätigen eines Schalters erfolgen, wobei die Anzahl der Betätigungen der Anzahl der gewünschten Menge entspricht und der Schalter selbst die Produktart wiedergibt. Es sind aber auch andere Lösungen möglich, wie beispielsweise Schalter, mit denen die Förderung des gewünschten Produktes angestellt und nach Erreichen der gewünschten Fördermenge wieder abgestellt wird. Weiterhin ist es denkbar, eine Tastatur vorzusehen, über die die Menge und Art eingegeben wird oder Münz- oder Kartenlesegeräte, wobei anhand der Münzen oder Karten oder sonstiger Informationsträger die Art und Menge der gewünschten Produkte erkennbar ist.

Neben der Aufstellung einer erfindungsgemäßen Vorrichtung innerhalb von Verkaufsräumen ist es auch denkbar, lediglich die Ausgabeeinrichtung an einer Gebäudeaußenseite anzuordnen. In diesem Fall kann ein Straßenverkauf bewerkstelligt werden.

Als vorteilhaft ist auch anzusehen, wenn eine Eingabeeinrichtung zur Eingabe von Zahlungsmitteln oder von kundenabhängigen Informationen vorgesehen ist. Diese kundenabhängigen Informationen können beispielsweise in Form von Kontodaten, Bargeldeinheiten, Namen und Passwörter, Vorbestellungsnummern oder Entnahmemengen umfassen. Damit können beispielsweise Gastronomen oder Hotelbesitzer unabhängig von Ladenöffnungszeiten auf frische Backwaren zugreifen. Eine Abrechnung kann dann etwa über ein vorher eingerichtetes Konto erfolgen. Daneben ist es aber auch möglich, die Produkte über die Ausgabeeinrichtung an normale Straßenkundschaft, beispielsweise gegen Barzahlung oder Kartenzahlung, abzugeben.

Schließlich hat es sich als verkaufsfördernd und damit als vorteilhaft erwiesen, wenn eine Luftführungseinrichtung vorgesehen ist, die Luft aus der Ausgabeeinrichtung und/oder dem Backofen zumindest zeitweise in den Verkaufsraum leitet. Beispielsweise durch den Geruch von frisch zubereiteten Backwaren, den ein Kunde in der Regel sehr intensiv wahrnimmt, wird dieser auf das Vorhandensein von Backwaren hingewiesen. Dies fördert den Absatz der Produkte und sorgt für eine von der Allgemeinheit als angenehm empfundene Duftkulisse. Um eine Belästigung der Kundschaft im Verkaufsbereich durch eine zu intensive Duftkulisse oder durch zu hohe Temperaturen, wie sie beispielsweise im Sommer auftreten, zu vermeiden, ist vorgesehen, dass die Luft aus der Ausgabeeinrichtung über einen zweiten Weg ableitbar ist, der nicht in den Verkaufsbereich führt und vorzugsweise auf möglichst direktem Weg ins Freie mündet.

Weitere Vorteile der Erfindung ergeben sich aus den zugehörigen Unteransprüchen oder sind im Zusammenhang mit den nachfolgenden Ausführungsbeispielen und der Zeichnung beschrieben. Es zeigt darin:
- **Figur 1**: eine erfindungsgemäße Vorrichtung in einer seitlichen Schnittansicht;
- **Figur 2**: eine weitere Ausführungsform einer erfindungsgemäßen Vorrichtung in einer seitlichen Schnittansicht;
- **Figur 3**: eine dritte Ausführungsform einer erfindungsgemäßen Ausgabeeinrichtung in einer Frontansicht;
- **Figur 4**: eine seitliche Schnittansicht einer vierten Ausführungsform einer erfindungsgemäßen Vorrichtung;
- **Figur 5**: eine seitlichen Schnittansicht einer fünfte Ausführungsform einer erfindungsgemäßen Vorrichtung;
- **Figur 6**: eine Seitenansicht auf eine erfindungsgemäße Aufgabeeinrichtung;
- **Figur 7**: die Aufgabeeinrichtung nach Figur 6 mit anderer Bestückung, und
- **Figur 8**: eine teilweise Seitenansicht einer Fördereinrichtung mit verschwenkbaren Trägerelementen.

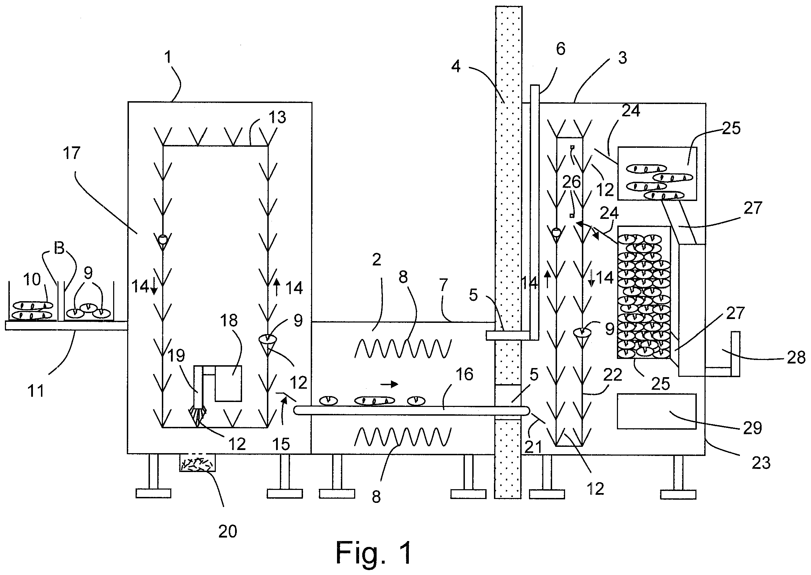

In Figur 1 ist eine erfindungsgemäße Einrichtung mit einer Vorrichtung zur Lagerung, Behandlung und Ausgabe von Backwaren in einer seitlichen Schnittansicht dargestellt. Die vorliegende Vorrichtung besteht aus drei Abschnitten 1, 2, 3. Zwischen dem zweiten Abschnitt 2 und dem dritten Abschnitt 3 ist ein bautechnisches Trennmittel in Form einer Wand 4 angeordnet. Die Wand 4 weist zwei Verbindungsöffnungen 5 auf, durch die der zweite Abschnitt 2 und der dritte Abschnitt 3 miteinander verbunden sind. In der oberen Verbindungsöffnung 5 erstreckt sich ein Luftabzugsrohr 6, das im zweiten Abschnitt 2 entstehende Abluft zur Oberseite des dritten Abschnittes 3 abführt. Der zweite Abschnitt 2 ist bei der dargestellten Ausführungsform ein Durchlaufbackofen 7, der decken- und bodenseitig mit Heizungswendeln 8 ausgestattet ist. Für die Erfindung ist es dabei vollkommen unerheblich, ob die Heizung elektrisch, per Gas oder in sonstiger Weise betrieben ist.

Besonders gut erkennbar ist in der vorliegenden Figur, dass erheblicher Bauraum in einem rechts der Wand 4 liegenden Verkaufsbereich eingespart wird. Statt dessen werden die im Verkaufsbereich nicht benötigten Vorrichtungen in einen linksseitig der Wand 4 liegenden Bereich verlegt. Dies kann beispielsweise ein Lagerraum oder sonstige außerhalb des Verkaufsbereiches liegende und nicht allgemein zugängliche Räumlichkeiten sein. Es wird dadurch Verkaufsraum in erheblichem Maß eingespart und Verschmutzungen des Verkaufsraumes, wie sie beispielsweise beim Bestücken der Vorrichtung auftreten, entfallen.

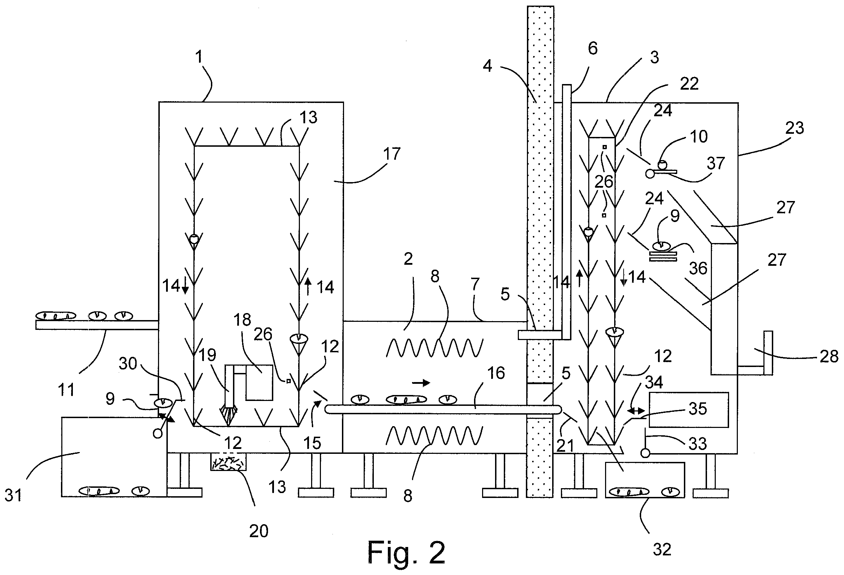

Die Funktionsweise sieht prinzipiell einen Durchlauf von Backwaren von links nach rechts vor. Die Backwaren in dem vorliegenden Fall sind Schnittbrötchen 9 und Baguettebrote 10. Sie werden auf einem Aufgabetisch 11 vorgelegt (gemäß der Figur 1 in Behältern B, gemäß der Figur 2 einzeln) und anschließend manuell oder automatisch in Trägerelemente 12 einer umlaufenden Fördereinrichtung 13 eingelegt. Die hier dargestellten Trägerelemente 12 weisen eine V-Form auf und sind damit zur Aufnahme unterschiedlichster Backwaren geeignet. Sie können aber auch beispielsweise in Form von Körben oder anderen geeigneten Aufnahmebehältern ausgebildet sein. Die Fördereinrichtung 13 ist vorzugsweise als Förderkette ausgebildet, die sich in Richtung der Pfeile 14 bewegt. Gelangt nun ein Trägerelement 12 zu einer Rampe 15, so bleibt es im Verlauf der Aufwärtsbewegung an der Rampe 15 hängen, dreht sich um seinen Befestigungspunkt an der Fördereinrichtung 13 nach rechts weg und kippt die aufgeladene Backware über die Rampe 15 auf eine zweite Fördereinrichtung in Form eines Backbandes 16, das sich durch den Durchlaufbackofen 7 erstreckt. Die Fördereinrichtung 13 ist innerhalb eines Gehäuses angeordnet, welches eine Aufgabeeinrichtung 17 bildet. In der dargestellten Ausführungsform durchläuft die Fördereinrichtung 13 einen einfachen Durchlauf. Sie kann dabei aber auch beispielsweise mäandrieren und so die Speicherkapazität der Trägerelemente 12 durch Vergrößerung der Länge der Fördereinrichtung 13 deutlich erhöhen.

Um beispielsweise nach einer Anforderung des auf der rechten Seite der Fördereinrichtung 13 dargestellten Brötchens 9 nicht einen kompletten Umlauf in Richtung der Pfeile 14 durchlaufen zu müssen, ist die Bewegungsrichtung der Fördereinrichtung 13 zeitweise auch umschaltbar. Vorliegend bedeutet dies, dass das Trägerelement 12, auf dem das Brötchen 9 liegt, zunächst um zwei Positionen nach unten und anschließend wieder nach oben bewegt wird, um das Trägerelement 12 an der Rampe 15 zu entleeren.

Zur Reinigung der Trägerelemente 12 ist innerhalb der Aufgabeeinrichtung 17 eine Reinigungsvorrichtung 18 mit einer beweglichen Bürste 19 vorgesehen. Gelangt nun unterhalb der Bürste 19 ein leeres Trägerelement 12 zum stehen, so leitet die Reinigungsvorrichtung 18 eine Reinigung ein und die dabei anfallenden Verschmutzungen sammeln sich in einem Sammelbehälter 20, der an der Unterseite der Aufgabeeinrichtung 17 angeordnet ist. Im weiteren Verlauf wird das auf dem Backband 16 befindliche Backgut durch die untere Verbindungsöffnung 5 zu einer zweiten Rampe 21 transportiert, von wo es vereinzelt in die Trägerelemente 12 einer zweiten Fördereinrichtung 22 gelangt. Die zweite Fördereinrichtung 22 befindet sich dabei innerhalb einer Ausgabeeinrichtung 23, die rechtsseitig der Wand 4 in einem vorgesehenen Verkaufsbereich liegt. Die zweite Fördereinrichtung 22 kann, wie zuvor, entweder in Richtung der Pfeile 14 oder in entgegengesetzter Richtung verfahren werden. Die Trägerelemente 12 gelangen dann an Abgaberampen 24, die zu Speichern 25 führen. Innerhalb der Speicher 25 werden nur Backwaren jeweils eines Typs angesammelt. Gelangt beispielsweise ein Schnittbrötchen 9 im Bereich der unteren Abgaberampe 24 auf gleiche Höhe mit einem Auswerfer 26, so bewegt sich dieser nach rechts, kippt das Trägerelement 12 und entleert damit das Schnittbrötchen 9 auf die untere Ausgaberampe 24, von wo es in den Speicher 25 fällt. In ähnlicher Weise geschieht die Abgabe der Baguettebrote 10 an der darüber liegenden Abgaberampe 24. Die Ausgabe der Backwaren erfolgt bei der hier gezeigten Ausführungsform über Schächte 27 in ein manuelles Ausgabefach 28. Hierzu können beispielsweise an den Schächten 27 geeignete Vereinzelungseinrichtungen vorgesehen sein, die je nach Anforderung durch einen Kunden eine entsprechende Anzahl von Backwaren des gewünschten Typs abgeben. Im unteren Bereich der Ausgabeeinrichtung 23 ist noch eine Steuerungseinrichtung 29 angeordnet, die Funktionen der Vorrichtung, beispielsweise mittels einer elektronischen Steuereinrichtung, überwacht. Mögliche Funktionen, welche von der Steuerungseinrichtung 29 überwacht werden, sind der Antrieb der Fördereinrichtungen 13, 22, die Steuerung der Auswerfer, Steuerung der Reinigungsvorrichtung, Steuerung der an den Schächten 27 angeordneten Vereinzelungsvorrichtungen und die Verfolgung der einzelnen Trägerelemente 12 sowie Überwachung der jeweiligen Beladungszustände. Hierzu besitzt jedes Trägerelement 12 eine eigene Kennzeichnung. Diesem Kennzeichen wird die Information über den Beladungszustand bzw. Art der beladenen Ware hinzugefügt und zusammen mit der Information über die Verfahrstellung der Fördereinrichtungen 13, 22 kann die Steuerungseinrichtung die Position jedes Trägerelementes 12 und damit auch der beladenen Backware bestimmen. Zusätzlich ist es hilfreich, Zeitinformationen, beispielsweise über den Belade- und Entladezeitpunkt eines Trägerelementes 12, zu erfassen. Diese können dann innerhalb einer Speichervorrichtung, die beispielsweise an die Steuerungseinrichtung 29 angeschlossen ist, hinterlegt werden. Damit kann eine Ansteuerung des Backbandes 16 durch die Steuerungseinrichtung 29 entfallen. Wird nämlich das Backgut zu einem Zeitpunkt x₀ an das Backband 16 abgegeben und weist das Backband 16 eine konstante Durchlaufzeit y auf, so kann die Steuerung berechnen, dass das jeweilige Backgut zum Zeitpunkt x₀+y an der zweiten Rampe 21 ankommt.

Die Figur 2 zeigt eine andere Ausführungsform einer erfindungsgemäßen Vorrichtung, wiederum in einer seitlichen Schnittdarstellung. Die drei Abschnitte 1, 2, 3 sind dabei wie zuvor relativ zur Wand 4 angeordnet. Die Beladung der Fördereinrichtung 13 erfolgt in der bereits zuvor beschriebenen Weise. Zur Entladung der Trägerelemente 12 ist nun aber auch an der Fördereinrichtung 13 ein Auswerfer 26 vorgesehen, der die Backwaren auf die Rampe 15 kippt. Zusätzlich ist an der Aufgabeeinrichtung 17 eine automatische Entleerung vorgesehen. Diese kann beispielsweise nach Ladenschluss erforderlich werden, um die noch in der Aufgabeeinrichtung 17 befindlichen Backwaren für den Verkauf am nächsten Tag zu entnehmen und kühl zu stellen. In diesem Fall wird eine Klappe 30 durch Rechtsschwenken aus ihrer vertikalen Position in eine Offenstellung gebracht. Läuft nun die Fördereinrichtung 13 entgegen der Pfeilrichtung 14, so bleibt jedes Trägerelement 12 an dem nach rechts vorstehenden Kragen der Klappe 30 hängen, verschwenkt daraufhin nach links und gibt das gegebenenfalls darauf befindliche Backgut ab. Die Backwaren fallen dann, wie gezeigt, durch eine Öffnung im Gehäuse in einen Frischgutbehälter 31. Gleichzeitig ist auch an der Ausgabeeinrichtung 23 eine automatische Entleerung vorgesehen. Dazu befindet sich unterhalb der Ausgabeeinrichtung 23 ein Altgutbehälter 32, in den das abgegebene Altgebäck durch eine Klappe 33 fällt. Die Betätigung der Trägerelemente 12 der Fördereinrichtung 22 erfolgt über einen in Richtung eines Pfeils 34 verstellbaren Arm 35. Ist der Arm 35 nach links ausgefahren und wird die Fördereinrichtung entgegen der Pfeile 14 bewegt, so verschwenken auch bei dieser Fördereinrichtung 22 die Trägerelemente nach rechts und geben das gegebenenfalls darauf befindliche Backgut frei, so dass es in den Altgutbehälter 32 gelangt.

Neben der gezeigten Betätigung der Trägerelemente 12 ist es aber selbstverständlich auch möglich, andere Ausführungsformen zu verwenden, wie beispielsweise die zuvor beschriebenen Auswerfer 26.

Die Lagerung des Backgutes nach der Abgabe aus den Trägerelementen 12 der Fördereinrichtung 22 innerhalb der Ausgabeeinrichtung 23 unterscheidet sich gegenüber der in Figur 1 dargestellten Ausführungsform dadurch, dass die Schnittbrötchen 9 auf einem sich in normaler Richtung zur Bildebene erstreckenden Ausgabeband 36 liegen. Nach dem Wegschwenken der Trägerelemente 12 gelangen diese über die Abgaberampe 24 auf das Ausgabeband 36. Dort sind sie hintereinanderliegend angeordnet. Bei Bedarf wird dann das Abgabeband 36 in Bewegung versetzt und das jeweils zuerst liegende Brötchen 9 fällt zuerst in den darunter liegenden Schacht 27 und anschließend in die manuelle Ausgabe 28. Für die Speicherung des Baguettebrotes 10 ist darüber eine Ausgabeklappe 37 schwenkbar angeordnet. Dabei gelangt das aus dem Trägerelement 12 über die Abgaberampe 24 zugeführte Baguettebrot 10 auf die zunächst horizontal ausgerichtete Ausgabeklappe 37. Wahlweise kann die Ausgabeklappe 37 auch die Form eines V- oder U-Profils aufweisen, um das Baguettebrot 10 vor einem seitlichen Herabfallen zu schützen. Nach einer Anforderung des Baguettebrotes 10 wird die Ausgabeklappe 37 dann lediglich nach unten geschwenkt und das Baguettebrot 10 fällt über den oberen Schacht 27 ebenfalls in die manuelle Ausgabe 28.

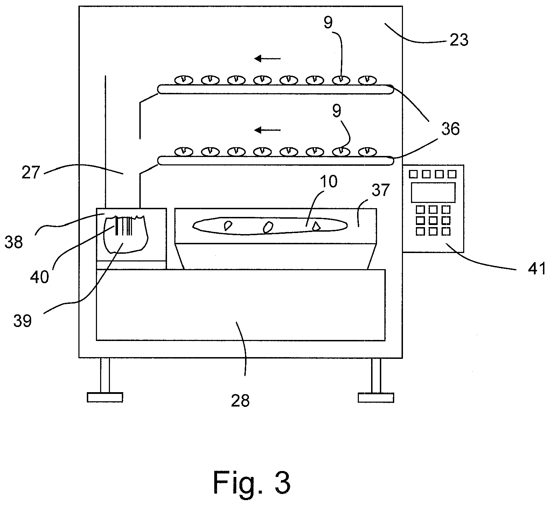

In Figur 3 ist eine Ausgabeeinrichtung 23 in einer Frontansicht dargestellt. Die dahinterliegenden Verbindungsöffnungen werden von der im Verkaufsbereich liegenden Ausgabeeinrichtung 23 vollständig verdeckt. Bei dieser Ausführungsform weist die Ausgabeeinrichtung 23 zwei übereinanderliegende Ausgabebänder 36 für Schnittbrötchen 9 auf. Die zuvor beschriebene Ausgabeklappe 37 für Baguettebrot 10 ist bei dieser Ausführungsform unterhalb der Ausgabebänder 36 angeordnet. Bei einer Anforderung von Schnittbrötchen 9 transportiert das Ausgabeband 36 diese in Pfeilrichtung nach links, von wo sie über den Schacht 27 in eine Verpackungseinrichtung 38 gelangen. Dort werden sie in eine Tüte 39 befördert. Gleichzeitig wird auf der Tüte 39 ein Informationsträger in Form eines Barcodes 40 aufgebracht. In ähnlicher Weise kann auch das Baguettebrot 10 in eine Papiertüte oder Kartonage verpackt und ausgegeben werden. Bei der dargestellten Ausführungsform wird das Baguettebrot 10 allerdings direkt in das manuelle Ausgabefach 28 freigegeben. An der rechten Seite der Ausgabeeinrichtung 23 befindet sich noch eine Eingabeeinheit 41, über die der Kunde die gewünschte Art und Anzahl von Backwaren eingeben kann. Daneben kann die Eingabeeinheit aber auch Zahlungsfunktion, z. B. für Bargeld oder Kartenzahlungen, übernehmen oder sonstige Datenträger oder Schlüssel einlesen.

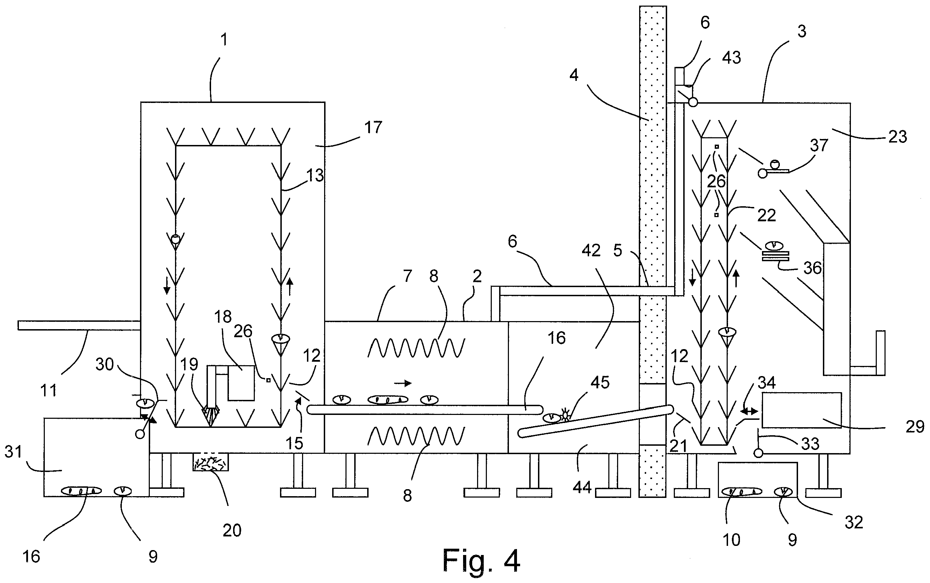

Die Figur 4 zeigt eine erfindungsgemäße Vorrichtung bestehend aus vier Abschnitten 1, 2, 3, 42. Die Führung des Luftabzugsrohres 6 ist dahingehend abgeändert, dass sie nicht direkt vom Durchlaufbackofen 7, sondern oberhalb des vierten Abschnittes 42 zur Wand 4 verläuft. An der Oberseite der Ausgabeeinrichtung 23 ist eine Luftklappe 43 angeordnet, über die im geöffneten Zustand die im Durchlaufbackofen 7 erzeugten Abluftmengen in den Verkaufsbereich geleitet werden. Zusätzlich eingefügt wurde der vierte Abschnitt 42, um als Puffer zwischen dem zweiten und dem dritten Abschnitt zu dienen. Der als Zwischenspeicher 44 ausgebildete vierte Abschnitt 42 wirkt hier als zeitlicher Puffer zwischen dem Durchlaufbackofen 7 und der Ausgabeeinrichtung 23. Es kommt in der Praxis nämlich vor, dass trotz der genauen Erfassung des Abgabezeitpunktes der Backware aus den Trägerelementen 12 der Fördereinrichtung 23 der Aufgabeeinrichtung 17 und einer genau bekannten Durchlaufzeit des Backgutes auf dem Backband 16 dieses nur mit einer gewissen zeitlichen Toleranz abgegeben wird. Bei einer direkten Übergabe vom Backband 16 an die Trägerelemente 12 der Fördereinrichtung 22 müssten damit das jeweils zu befüllende Trägerelement 12 und damit die gesamte Fördereinrichtung 23 während der gesamten Dauer dieses Zeitfensters in der Übergangsstellung verharren, um sicherzustellen, dass das jeweilige Backgut auch angekommen ist. Während dieser Zeit ist die Fördereinrichtung 22 aber nicht in der Lage, beispielsweise die Speicher 25 oder die Ausgabebänder 36 bzw. Ausgabeklappen 37 zu versorgen. Nutzt man nun den Zwischenspeicher 44, so kann etwa mittels einer Lichtschranke 45 das Vorhandensein des Backgutes exakt erfasst und dieses anschließend in sehr kurzer Zeit über die Rampe 15 an die Trägerelemente 12 der Fördereinrichtung 22 übergeben werden. Hierdurch reduziert sich die Stillstandzeit der Fördereinrichtung 22 erheblich.

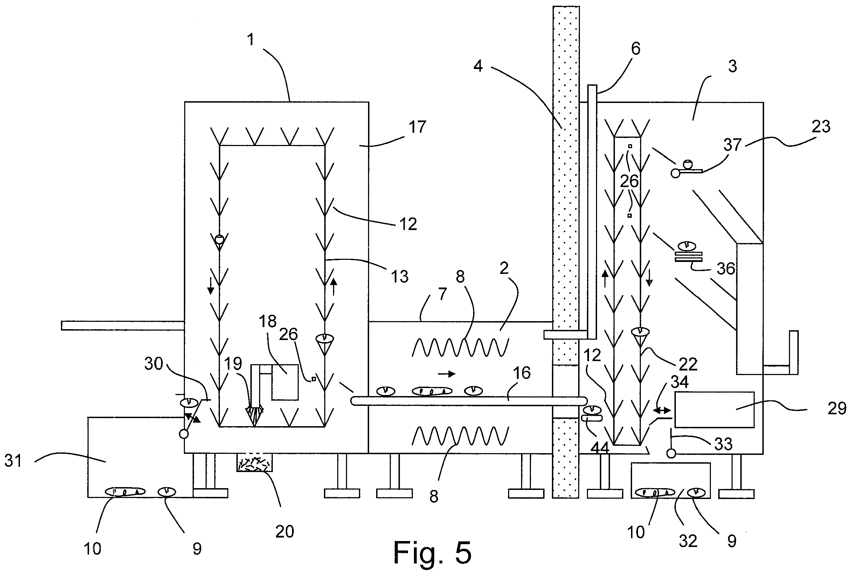

In Figur 5 ist eine Ausführungsform mit drei Abschnitten 1, 2, 3 gezeigt, deren Funktionsweise und Einzelheiten weitestgehend zuvor bereits beschrieben sind. Diese besondere Ausführungsform weist zusätzlich noch einen in die Ausgabeeinrichtung 23 integrierten Zwischenspeicher 44 auf. Das vom Backband 16 abgegebene Backgut wird dabei innerhalb eines Zeitfensters für den Durchlauf durch den Durchlaufbackofen 7 auf ein ebenfalls umlaufendes Band des Zwischenspeichers 44 abgegeben. Das Vorhandensein des Backgutes kann dann mittels üblicher Sensoren, wie beispielsweise Lichtschranken oder Ultraschallsensoren, festgestellt werden. Liegt das Backgut im Zwischenspeicher 44 bereit, kann das nächste verfügbare Trägerelement 12 der Fördereinrichtung 22 damit bestückt werden. Dies geschieht durch Verfahren des umlaufenden Bandes des Zwischenspeichers 44 in entsprechender Richtung. Alternativ kann der Einsatz von Sensoren zur Feststellung der Anwesenheit von Backgut auch entfallen, wenn im Zwischenspeicher 44 das Umlaufband stets erst nach dem Verstreichen des längstmöglichen Zeitfensters in Gang gesetzt wird. Dann ist nämlich ebenfalls sichergestellt, dass sich das Backgut im Zwischenspeicher 44 befindet.

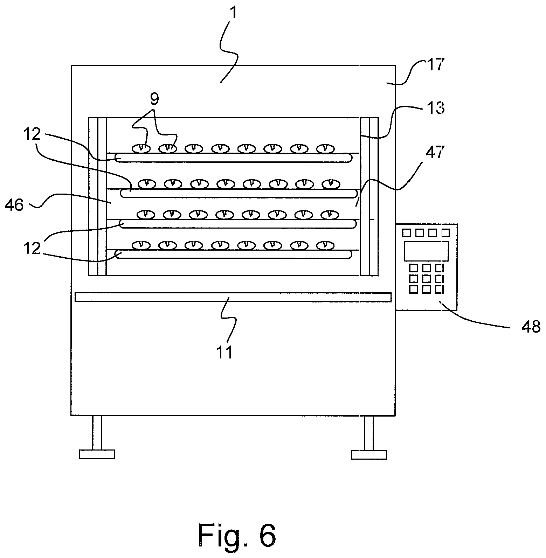

Die Figur 6 zeigt den als Aufgabeeinrichtung 17 ausgebildeten ersten Abschnitt 1. Eine Beladestelle 46 ermöglicht den gleichzeitigen Zugriff auf vier Trägerelemente 12. Auf den Trägerelementen 12 befinden sich Backwaren in Form von Schnittbrötchen 9, die vereinzelt auf die Trägerelemente 12 aufgelegt sind. Vorliegend werden die Brötchen 9 - Beispiel für Kleinbackwaren-nebeneinander einreihig auf die sich über die Breite der Aufgabeeinrichtung 17 erstreckenden Trägerelemente 12 gelegt.

Die Trägerelemente 12 sind über Drehachsen 47 an die Fördereinrichtung 13 angebunden. An der rechten Seite der Aufgabeeinrichtung 17 befindet sich eine Anzeige-/Eingabevorrichtung 48. Unterhalb der Beladestelle 46 ist der Aufgabetisch 11 angeordnet, auf dem auch Behälter B mit den vom Bedienpersonal an der Beladestelle 46 einzulegenden Backwaren abgestellt werden können (s. Figur 1).

In dem dargestellten Zustand ist die Beladestelle 46 geöffnet dargestellt. In diesem Zustand erfolgt die Bestückung der Vorrichtung. In der übrigen Zeit ist die Beladestelle 46 beispielsweise durch ein einsteckbares Wandelement oder eine Schiebetür bzw. automatisch verfahrende Tür verschlossen.

Das Bedienpersonal führt die Bestückung durch, indem es manuell die Brötchen aus einem Lieferbehälter auf die Trägerelemente 12 auflegt. Die Anzeige-/Eingabevorrichtung 48 kann dabei in zweierlei Weise genutzt werden. Bei der ersten Arbeitsweise liest der Bediener von der Anzeige der Anzeige-/ Eingabevorrichtung 48 die zu bestückende Art der Backwaren aus und bestückt die Trägerelemente 12 entsprechend. Bei der zweiten Arbeitsweise bestückt der Bediener die Trägerelemente 12 nach seiner Wahl und gibt über die Anzeige-/Eingabevorrichtung 48 der Steuerung die entsprechende Information über die Art bzw. Menge der bestückten Backwaren an.

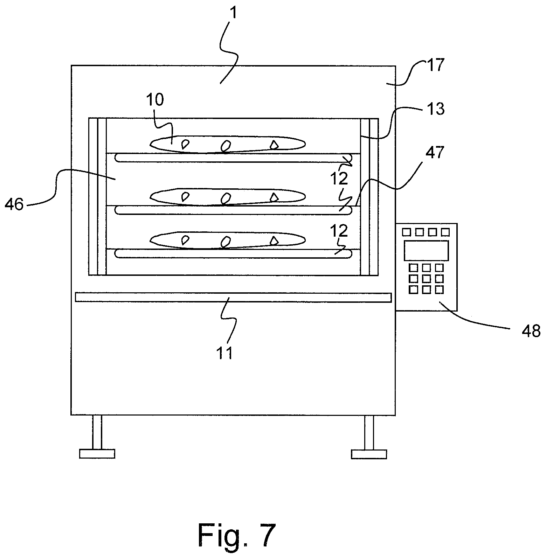

In Figur 7 ist die Aufgabeeinrichtung 17 nach Figur 6 nochmals dargestellt. Gegenüber der Figur 6 hat sich jedoch die Art der bestückten Backwaren geändert. Es handelt sich hierbei um Großbackwaren und im speziellen um Baguettebrote 10, welche auf drei - gegenüber den Trägerelementen 12 der Figur 6 vertikal größer beabstandete - Trägerelemente 12 aufgelegt sind. Die gegenüber den Brötchen 9 höheren Baguettebrote 10 sind dabei ebenso wie die in Figur 6 gezeigten Schnittbrötchen 9 entlang der Längsrichtung der Trägerelemente 12 ausgerichtet.

Da die Trägerelemente 12 für Großbackwaren 10 vorliegend einen unterschiedlichen Abstand voneinander haben als die Trägerelemente 12 für Kleinbackwaren 9, ist es vorteilhaft, wenn über die Anzeige-/Eingabevorrichtung 48 die entsprechend passenden Trägerelemente 12 durch Eingabe von beispielsweise einem Symbol für Klein- oder Großbackwaren 9 bzw. 10 herbeigerufen werden können. Je nach Wahl werden dann vier Trägerelemente 12 für Kleinbackwaren 9 (Figur 6) oder drei Trägerelemente 12 für Großbackwaren 10 zur Beladestelle 46 vorgefahren. Diese Zahlen sind selbstverständlich nur beispielhafte Angaben.

Die Trägerelemente 12 für einerseits Klein- und andererseits Großbackwaren können unterschiedlich breit ausgebildet sein, da diese Backwaren in aller Regel auch selbst unterschiedliche Breiten aufweisen.

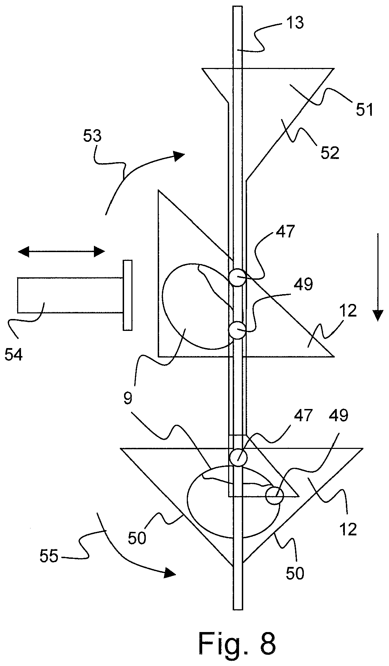

Die Figur 8 schließlich zeigt eine erfindungsgemäße Fördereinrichtung 13 mit schwenkbaren Trägerelementen 12. Bei der Fördereinrichtung 13 handelt es sich um ein vertikal verlaufendes Förderband bzw. eine vertikal verlaufende Förderkette, an welcher die V-förmig ausgebildeten Trägerelemente 12 mittels der Drehachse 47 drehbar befestigt sind. Zusätzlich weisen diese Trägerelemente 12 Führungsstifte 49 auf. Die Funktionsweise der Fördereinrichtung 13 sieht eine durchlaufende Bewegung der Trägerelemente 12 von oben nach unten vor. Im normalen Transportzustand sind die Trägerelemente 12 V-förmig angeordnet. In dieser Stellung befindet sich das untere der beiden dargestellten Trägerelemente 12. Dabei bilden die beiden seitlichen Auflageflächen 50 ein V, in dem das Schnittbrötchen 9 aufliegt. Gelangt nun ein Trägerelement 12 in dieser Stellung von oben in einen Trichter 51, so wird der Führungsstift 49 durch die Seitenfläche 52 des Trichters 51 in Richtung der Drehachse 47 gedrückt und das Trägerelement 12 führt eine Rechtsdrehung in Richtung des Pfeils 53 um die Drehachse 47 aus. In der gezeigten Stellung kann dann beispielsweise mittels eines Schiebers 54 das einzelne Brötchen 9 oder eine Mehrzahl von Brötchen 9 vom Trägerelement 12 nach rechts abgestoßen werden. Verfährt das Trägerelement 12 dann weiter nach unten, schwenkt dieses mit einer Linksdrehung um die Drehachse 47 in Richtung des Pfeils 55 zurück in seine Ausgangsposition. Mit der gezeigten Überführung der Trägerelemente 12 von einer Transportposition in eine Be- bzw. Entladeposition und zurück ist ein sicherer Transport der Backwaren durch die gesamte Vorrichtung gewährleistet. Gleichzeitig können die Backwaren an den gewünschten Stellen leicht be- und entladen werden, da die Trägerelemente 12 in entsprechend günstige Stellungen verfahrbar sind. Ein unbeabsichtigtes Herabfallen von Backwaren, beispielsweise auf den Transport innerhalb der Vorrichtung, kann zu erheblichen Störungen des Betriebs führen, wird jedoch durch die vorliegende Ausführungsform der Trägerelemente 12 wirksam vermieden. Im Ergebnis führt dies somit zu einem besonders zuverlässigen Betrieb der erfindungsgemäßen Vorrichtung.

Die vorliegende Erfindung ist nicht auf die dargestellten Ausführungsbeispiele beschränkt. Es sind vielmehr zahlreiche Abwandlungen im Rahmen der Patentansprüche möglich. So kann beispielsweise die dargestellte bauliche Trennung in Form der Wand zwischen dem ersten und zweiten Abschnitt liegen, aber auch zwischen dem zweiten und dritten oder beliebigen anderen Abschnitten. Darüber hinaus versteht der Fachmann, dass neben den dargestellten Transport- und Fördereinrichtungen zahlreiche andere Ausführungsformen und -arten bekannt und geeignet sind, um eine Verbindung durch die Verbindungsöffnung 5 zwischen den Abschnitten herzustellen. In besonders einfachen Ausgestaltungen kann auch nur eine einzige Fördereinrichtung für alle Abschnitte vorgesehen sein. Auch können die Trägerelemente in unterschiedlichster Weise hergestellt werden, wie z.B. als Drahtkörbe, Metallgussteil oder Kunststoffteile aus hitzebeständigem Kunststoff. Neben der beschriebenen Verwendung der erfindungsgemäßen Vorrichtung für Backwaren kann sie aber auch im Zusammenhang mit anderen Waren, wie etwa Wurstwaren, Lebensmittelkonserven, Fertiggerichten und ähnlichem eingesetzt werden. Zudem ist es möglich, die Auslegung der erfindungsgemäßen Vorrichtungen sowie die Anwendung der erfindungsgemäßen Verfahren durch die Verwendung unterschiedlicher Trägerelemente in verschiedenen Abschnitten und die Übergabe der Lebensmittel zwischen diesen Trägerelementen an die jeweilige Anwendungssituation besonders gut anzupassen.

## Patentansprüche

1. Gebäude, insbesondere Supermarkt o. dgl., mit einer Vorrichtung zur Lagerung, Behandlung und Ausgabe von Backwaren (9, 10) mit drei Abschnitten (1, 2, 3), wobei einer der Abschnitte (2) ein Durchlaufbackofen (7) ist, dem ein als Aufgabeeinrichtung (17) ausgebildeter Abschnitt (1) vorgeschaltet und ein als Ausgabeeinrichtung (23) ausgebildeter Abschnitt (3) nachgeschaltet ist, wobei die Backwaren (9, 10) mittels Fördereinrichtungen (13, 16, 22) in dem jeweiligen Abschnitt (1, 2, 3) gefördert und von der Aufgabeeinrichtung (17) zum Durchlaufbackofen (7) und anschließend zur Ausgabeeinrichtung (23) transportiert werden, wobei die Aufgabeeinrichtung (17) zur Aufnahme bzw. Lagerung von Backwaren und die Ausgabeeinrichtung (23) zur Lagerung bzw. Ausgabe von Backwaren ausgebildet sind, wobei die Fördereinrichtung (13) in der Aufgabeeinrichtung (17) und die Fördereinrichtung (22) in der Ausgabeeinrichtung (23) jeweils umlaufend mit jeweils verfahrbaren Trägerelementen (12) ausgebildet sind, **dadurch gekennzeichnet, dass** zwischen dem Durchlaufbackofen (7) und der Ausgabeeinrichtung (23) eine Gebäudewand (4) mit einer oder mehreren Verbindungsöffnungen (5) angeordnet ist, wobei die Ausgabeeinrichtung (23) in einem innerhalb des Gebäudes liegenden Verkaufsbereich und die Aufgabeeinrichtung (17) und der Durchlaufbackofen (7), welche durch die Gebäudewand (4) vom Verkaufsbereich getrennt sind, in einem Lagerraum oder einer sonstigen, außerhalb des Verkaufsbereiches liegenden und nicht allgemein zugänglichen Räumlichkeit des Gebäudes angeordnet sind, dass jedem Trägerelement (12) in der Aufgabeeinrichtung (17) und in der Ausgabeeinrichtung (23) wenigstens eine Information über Laufzeit, Art der Beladung oder den momentanen Standort zugeordnet ist, und dass eine Steuereinrichtung zur Überwachung und Steuerung der Trägerelemente (12) vorgesehen ist, wobei an der Steuerungseinrichtung eine Speichereinrichtung vorgesehen ist zur Speicherung der den Trägerelementen (12) zugeordneten Informationen.

2. Gebäude nach Anspruch 1, **dadurch gekennzeichnet, dass** die wenigstens eine in der Gebäudewand (4) vorgesehene Verbindungsöffnung (5) von der Ausgabeeinrichtung (23) überdeckt ist.

3. Gebäude nach einem der vorhergehenden Ansprüche, **dadurch gekennzeichnet, dass** die Aufgabeeinrichtung (17) verfahrbare Trägerelemente (12) aufweist, auf die jeweils mehrere Kleinbackwaren (9) in vereinzelter Form aufbringbar sind, wobei zumindest die Kleinbackwaren (9) durch eine Bedienperson auf die Trägerelemente (12) manuell auflegbar sind.

4. Gebäude nach einem der vorhergehenden Ansprüche, **dadurch gekennzeichnet, dass** die Aufgabeeinrichtung (17) eine Beladestelle (46) aufweist, an welcher wenigstens ein Trägerelement (12) zur Bestückung seitens einer Bedienperson erreichbar ist, wobei an der Beladestelle (46) Anzeige- und/oder Eingabeeinrichtungen (48) zur Vorgabe und/oder Erfassung der Bestückung der Trägerelemente (12) angeordnet sind.

5. Gebäude nach Anspruch 4, **dadurch gekennzeichnet, dass** die Trägerelemente (12) als vorzugsweise schwenkbar gelagerte, längliche Körbe ausgebildet sind.

6. Gebäude nach einem der vorhergehenden Ansprüche, **dadurch gekennzeichnet, dass** wenigstens zwei unabhängig voneinander steuerbare Fördereinrichtungen (13, 22) vorgesehen sind, wobei eine Fördereinrichtung (13) in der Aufgabeeinrichtung und eine Fördereinrichtung (22) in der Ausgabeeinrichtung (23) angeordnet ist, und wobei die wenigstens zwei Fördereinrichtungen (13, 22) jeweils eine Mehrzahl von Trägerelementen (12) aufweisen.

7. Gebäude nach einem der vorhergehenden Ansprüche, **dadurch gekennzeichnet, dass** die Fördereinrichtungen (13, 16, 22) die in Längsrichtung der Trägerelemente (12) angeordneten Backwaren (9,10) unter Beibehaltung der Relativlage der Backwaren (9, 10) zueinander durch die gesamte Vorrichtung bis zum Kundenabruf an der Ausgabeeinrichtung (23) fördern.

8. Gebäude nach einem der vorhergehenden Ansprüche, **dadurch gekennzeichnet, dass** eine Luftführungseinrichtung (6) vorgesehen ist, die Luft aus der Ausgabeeinrichtung (23) und/oder dem Durchlaufbackofen (7) zumindest zeitweise in den Verkaufsbereich leitet.

9. Verfahren zur Lagerung, Behandlung und Ausgabe von Backwaren (9, 10) in Supermärkten o. dgl., bei dem die Backwaren (9, 10) in einem als Aufgabeeinrichtung (17) ausgebildeten ersten Abschnitt (1) aufgegeben, zu einem als Durchlaufbackofen (7) ausgebildeten zweiten Abschnitt (2) transportiert und dort gebacken oder aufgebacken werden und anschließend in einem als Ausgabeeinrichtung (23) ausgebildeten dritten Abschnitt (3) nach Kundenanforderung ausgegeben werden, wobei die Aufgabeeinrichtung (17) zur Aufnahme und Lagerung von Backwaren und die Ausgabeeinrichtung (23) zur Lagerung und Ausgabe von einer Mehrzahl von Backwaren ausgebildet sind, wobei die Fördereinrichtung (13) in der Aufgabeeinrichtung (17) und die Fördereinrichtung (22) in der Ausgabeeinrichtung (23) jeweils umlaufend mit jeweils verfahrbaren Trägerelementen (12) ausgebildet sind, **dadurch gekennzeichnet, dass** das Aufgeben und Backen bzw. Aufbacken der Backwaren (9, 10) in einem Lagerraum oder einer sonstigen, außerhalb des Verkaufsbereiches liegenden und nicht allgemein zugänglichen Räumlichkeit angeordnet sind, durchgeführt wird, und dass das Ausgeben der Backwaren (9, 10) in einem innerhalb des Supermarkts o. dgl. liegenden Verkaufsbereich erfolgt, wobei eine Gebäudewand (4) mit einer oder mehreren Verbindungsöffnungen (5) zwischen der Aufgabeeinrichtung (17) und dem Durchlaufbackofen (7) einerseits und der Ausgabeeinrichtung (23) andererseits vorgesehen ist, dass jedem Trägerelement (12) in der Aufgabeeinrichtung (17) und jedem Trägerelement (12) in der Ausgabeeinrichtung (23) wenigstens eine Information über Laufzeit, Art der Beladung oder den momentanen Standort zugeordnet wird, und dass eine Steuereinrichtung zur Überwachung und Steuerung der Trägerelemente (12) vorgesehen ist, wobei an der Steuerungseinrichtung eine Speichereinrichtung vorgesehen ist zur Speicherung der den Trägerelementen (12) zugeordneten Informationen.

10. Verfahren nach Anspruch 9, **dadurch gekennzeichnet, dass** Kleinbackwaren (9), insbesondere Brötchen (9), Laugenbrezeln o. dgl., bei ihrer Aufgabe von einer Bedienperson vereinzelt in verfahrbare Trägerelemente (12) eingelegt werden, welche zur Förderung der Kleinbackwaren (9) zum Backofen dienen.

11. Verfahren nach Anspruch 10, **dadurch gekennzeichnet, dass** auch Großbackwaren (10) in Trägerelemente (12), ggf. solche anderer geometrischer Größe als diejenigen für die Kleinbackwaren (9), von einer Bedienperson eingelegt werden.

12. Verfahren nach einem der vorhergehenden Verfahrensansprüche, **dadurch gekennzeichnet, dass** die Backwaren (9, 10) jeweils eines Trägerelements (12) beim Backen und bis zum Kundenabruf an der Ausgabeeinrichtung (23) unter ständiger Beibehaltung ihrer Relativlage verarbeitet und transportiert werden.

13. Verfahren nach einem der vorhergehenden Verfahrensansprüche, **dadurch gekennzeichnet, dass** an einer Beladestelle (46) der Aufgabeeinrichtung (17) gleichzeitig eine Mehrzahl von Trägerelementen (12) bereitgestellt wird, vorzugsweise übereinander.

14. Verfahren nach einem der vorhergehenden Verfahrensansprüche, **dadurch gekennzeichnet, dass** Informationen über Art, Menge oder Zeitpunkt des Backwarendurchsatzes erfasst werden, wobei diese Informationen vorzugsweise ausgewertet und die Ergebnisse zur Steuerung der Vorrichtung verwendet werden.

15. Verfahren nach einem der vorhergehenden Verfahrensansprüche, **dadurch gekennzeichnet, dass** bei der Zubereitung anfallende Geruchsstoffe zusammen mit der umgebenden Luft zumindest zeitweise in den Verkaufsbereich abgegeben werden.

## Claims

1. A building, particularly a supermarket or the like, having a device for storing, handling, and dispensing baked goods (9, 10), and having three segments (1, 2, 3), one of the segments (2) being a conveyor oven (7) connected downstream of a segment (1) implemented as a loading device (17) and connected upstream of a segment (3) implemented as a dispensing device (23), the baked goods (9, 10) being conveyed by means of conveyor devices (13, 16, 22) in the particular segment (1, 2, 3) and being transported from the loading device (17) to the conveyor oven (7) and then to the dispensing device (23), the loading device (17) being implemented for receiving or storing baked goods and the dispensing device (23) being implemented for storing or dispensing baked goods, the conveyor device (13) in the loading device (17) and the conveyor device (22) in the dispensing device (23) each being implemented having movable and circulating carrier elements (12), **characterized in that** a building wall (4) having one or more connecting openings (5) is disposed between the conveyor oven (7) and the dispensing device (23), wherein the dispensing device (23) is disposed in a sales area within the building and the loading device (17) and the conveyor oven (7), separated from the sales area by the building wall (4), are disposed in a storeroom or another space in the building outside of the sales area and not accessible to the public, that each carrier element (12) in the loading device (17) and in the dispensing device (23) is associated with at least one item of information about elapsed time, type of load, or current location, and that a controller is provided for monitoring and controlling the carrier elements (12), wherein a storage device is provided on the controller for storing the information associated with the carrier elements (12).

2. The building according to claim 1, **characterized in that** the at least one connecting opening (5) provided in the building wall (4) is covered by the dispensing device (23).

3. The building according to any one of the preceding claims, **characterized in that** the loading device (17) comprises movable carrier elements (12) each of which can be loaded with several small baked goods (9) in singulated form, wherein at least the small baked goods (9) can be placed on the carrier elements (12) manually by an operator.

4. The building according to any one of the preceding claims, **characterized in that** the loading device (17) comprises a loading station (46) at which at least one carrier element (12) can be reached for loading by an operator, wherein display and/or input devices (48) are disposed at the loading station (46) for specifying and/or capturing the loading of the carrier elements (12).

5. The device according to claim 4, **characterized in that** the carrier elements (12) are implemented as preferably pivotally supported elongated baskets.

6. The building according to any one of the preceding claims, **characterized in that** at least two independently controllable conveyor devices (13, 22) are provided, wherein one conveyor device (13) is disposed in the loading device and one conveyor device (22) is disposed in the dispensing device (23), and wherein the at least two conveyor devices (13, 22) each comprise a plurality of carrier elements (12).

7. The building according to any one of the preceding claims, **characterized in that** the conveyor devices (13, 16, 22) convey the baked goods (9, 10) disposed in the longitudinal direction of the carrier elements (12) while maintaining the relative position of the baked goods (9, 10) to each other throughout the entire device until requested by the customer at the dispensing device (23).

8. The building according to one of the preceding claims, **characterized in that** an air guiding device (6) is provided for at least temporarily guiding air from the dispensing device (23) and/or the conveyor oven (7) into the sales area.

9. A method for storing, handling, and dispensing baked goods (9, 10) in supermarkets and the like, the baked goods (9, 10) being placed in a first segment (1) implemented as a loading device (17), transported to a second segment (2) implemented as a conveyor oven (7) and baked or crisped there, and then dispensed according to customer requests in a third segment (3) implemented as a dispensing device (23), the loading device (17) being implemented for receiving and storing baked goods and the dispensing device (23) being implemented for storing and dispensing a plurality of baked goods, the conveyor device (13) in the loading device (17) and the conveyor device (22) in the dispensing device (23) each being implemented having movable and circulating carrier elements (12), **characterized in that**, the loading and baking or crisping of the baked goods (9, 10) is performed in a storeroom or other room disposed outside of the sales area and not generally accessible, and that the baked goods (9, 10) are dispensed in a sales area within the supermarket or the like, wherein a building wall (4) having one or more connecting openings (5) is provided between the loading device (17) and the conveyor oven (7) on one side and the dispensing device (23) on the other, that each carrier element (12) in the loading device (17) and each carrier element (12) in the dispensing device (23) is associated with at least one item of information about elapsed time, type of load, or current location, and that a controller is provided for monitoring and controlling the carrier elements (12), wherein a storage device is provided on the controller for storing the information associated with the carrier elements (12).

10. The method according to claim 9, **characterized in that** small baked goods (9), particularly rolls (9), pretzels, or the like are placed individually in movable carrier elements (12) by an operator when ordered, said carrier elements (12) serving for conveying the small baked goods (9) to the oven.

11. The method according to claim 10, **characterized in that** large baked goods (10) can also be placed by an operator in carrier elements (12), optionally having a different geometric size than those for the small baked goods (9).

12. The method according to one of the preceding method claims, **characterized in that** the baked goods (9,10) of each carrier element (12) are processed and transported during baking and up to the customer request at the dispensing device (23) while continuously maintaining the relative position thereof.

13. The method according to any one of the preceding method claims, **characterized in that** a plurality of carrier elements (12) are made available simultaneously, preferably one above the other, at a loading point (46) of the loading device (17).

14. The method according to any one of the preceding method claims, **characterized in that** information about the type, quantity, or time of the baked good throughput is captured, wherein said information is preferably evaluated and the results used for controlling the device.

15. The method according to any one of the preceding method claims, **characterized in that** scent materials arising from the preparation are discharged into the sales area together with ambient air at least temporarily.

## Revendications

1. Bâtiment, en particulier supermarché ou bâtiment de ce genre, avec un dispositif pour le stockage, le traitement ou la distribution de produits de boulangerie et de pâtisserie (9, 10) avec trois sections (1, 2, 3), dans lequel l'une des sections (2) est un four tunnel (7), en amont duquel est disposée une section (1) se présentant sous la forme d'un dispositif de chargement (17) et en aval duquel est disposée une section (3) se présentant sous la forme d'un dispositif de distribution (23), dans lequel les produits de boulangerie et de pâtisserie (9, 10) sont transportés dans chaque section (1, 2, 3) par des dispositifs de transport (13, 16, 22), du dispositif de chargement (17) au four tunnel (7) et ensuite au dispositif de distribution (23), dans lequel le dispositif de chargement (17) est formé pour accueillir ou stocker des produits de boulangerie et de pâtisserie et le dispositif de distribution (23) est formé pour stocker ou distribuer des produits de boulangerie et de pâtisserie, dans lequel le dispositif de transport (13) dans le dispositif de chargement (17) et le dispositif de transport (22) dans le dispositif de distribution (23) se présentent respectivement sous forme avec des éléments porteurs (12) circonférentiels déplaçables, **caractérisé en ce qu'** un mur (4) du bâtiment est disposé entre le four tunnel (7) et le dispositif de distribution (23), avec une ou plusieurs ouvertures de liaison (5), sachant que le dispositif de distribution (23) est disposé dans un espace de vente situé au sein du bâtiment et le dispositif de chargement (17) et le four tunnel (7), qui sont séparés de l'espace de vente par le mur (4) du bâtiment, sont disposés dans un magasin de stockage ou dans un autre local du bâtiment situé hors de l'espace de vente et non généralement accessible, qu'au moins une information sur la durée de fonctionnement, le type de chargement ou la position actuelle est attribuée à chaque élément porteur (12) dans le dispositif de chargement (17) et dans le dispositif de distribution (23), et qu'un dispositif de commande est prévu pour la surveillance et la commande des éléments porteurs (12), sachant qu'un dispositif de mémorisation est prévu au dispositif de commande pour la mémorisation des informations attribuées aux éléments porteurs (12).

2. Bâtiment selon la revendication 1, **caractérisé en ce que** l'au moins une ouverture de liaison (5) prévue dans le mur (4) du bâtiment est couverte par le dispositif de distribution (23).

3. Bâtiment selon l'une des revendications précédentes, **caractérisé en ce que** le dispositif de chargement (17) comporte des éléments porteurs (12) déplaçables, sur lesquels peuvent être chargés respectivement plusieurs petits produits de boulangerie et de pâtisserie (9) sous forme individuelle, sachant qu'au moins les petits produits de boulangerie et de pâtisserie (9) peuvent être posés manuellement, par une personne de commande, sur les éléments porteurs (12).

4. Bâtiment selon l'une des revendications précédentes, **caractérisé en ce que** le dispositif de chargement (17) comporte un poste de chargement (46), auquel est accessible au moins un élément porteur (12) pour le chargement de la part d'une personne de commande, sachant que des dispositifs d'affichage et/ou de saisie (48) sont disposés au poste de chargement (46) pour allouer et/ou saisir le chargement des éléments porteurs (12).

5. Bâtiment selon la revendication 4, **caractérisé en ce que** les éléments porteurs (12) se présentent de préférence sous la forme de paniers oblongs montés sur palier pivotant.

6. Bâtiment selon l'une des revendications précédentes, **caractérisée en ce que** deux dispositifs de transport (13, 22) au moins commandables indépendamment l'un de l'autre sont prévus, sachant qu'un dispositif de transport (13) est disposé dans le dispositif de chargement et un dispositif de transport (22) est disposé dans le dispositif de distribution (23), et sachant que les au moins deux dispositifs de transport (13, 22) comportent respectivement une multitude d'éléments porteurs (12).

7. Bâtiment selon l'une des revendications précédentes, **caractérisé en ce que** les dispositifs de transport (13, 16, 22) transportent les produits de boulangerie et de pâtisserie (9, 10) disposés dans le sens longitudinal des éléments porteurs (12) à travers tout le dispositif, jusqu'à l'appel par le client au dispositif de distribution (23), en maintenant la position relative des produits de boulangerie et de pâtisserie (9, 10) les uns par rapport aux autres.

8. Bâtiment selon l'une des revendications précédentes, **caractérisé en ce qu'**il est prévu un dispositif de guidage d'air (6), qui refoule l'air au moins temporairement depuis le dispositif de distribution (23) et/ou le four tunnel (7) dans l'espace de vente.

9. Procédé pour le stockage, le traitement et la distribution de produits de boulangerie et de pâtisserie (9, 10) dans les supermarchés ou des bâtiments de ce genre, dans lequel les produits de boulangerie et de pâtisserie (9, 10) sont chargés dans une première section (1) se présentant sous la forme d'un dispositif de chargement (17), transportés dans une seconde section (2) se présentant sous la forme d'un four tunnel (7) et, là, cuits au four ou repassés au four et, ensuite, distribués sur demande d'un client dans une troisième section (3) se présentant sous la forme d'un dispositif de distribution (23), dans lequel le dispositif de chargement (17) est formé pour accueillir et stocker des produits de boulangerie et de pâtisserie et le dispositif de distribution (23) est formé pour stocker et distribuer une multitude de produits de boulangerie et de pâtisserie, dans lequel le dispositif de transport (13) dans le dispositif de chargement (17) et le dispositif de transport (22) dans le dispositif de distribution (23) se présentent respectivement sous forme avec des éléments porteurs (12) circonférentiels déplaçables, **caractérisé en ce que** le chargement et la cuisson au four ou le repassage au four des produits de boulangerie et de pâtisserie (9, 10) sont effectués dans un magasin de stockage ou dans un autre local du bâtiment situé hors de l'espace de vente et non généralement accessible, et que la distribution des produits de boulangerie et de pâtisserie (9, 10) a lieu dans un espace de vente situé au sein du supermarché ou dans un espace de ce genre, sachant qu'un mur (4) du bâtiment avec une ou plusieurs ouvertures (5) de liaison est prévu entre le dispositif de chargement (17) et le four tunnel (7) d'une part et le dispositif de distribution (23) d'autre part, qu'au moins une information sur la durée de fonctionnement, le type de chargement ou la position actuelle est attribuée à chaque élément porteur (12) dans le dispositif de chargement (17) et dans le dispositif de distribution (23), et qu'un dispositif de commande est prévu pour la surveillance et la commande des éléments porteurs (12), sachant qu'un dispositif de mémorisation est prévu au dispositif de commande pour la mémorisation des informations attribuées aux éléments porteurs (12).

10. Procédé selon la revendication 9, **caractérisé en ce que** de petits produits de boulangerie et de pâtisserie (9), en particulier des petits pains (9), des bretzels ou des produits de ce genre, lors de leur chargement, sont posés individuellement par une personne de commande sur des éléments porteurs (12), lesquels servent au transport des petits produits de boulangerie et de pâtisserie (9) vers le four.

11. Procédé selon la revendication 10, **caractérisé en ce que** des produits de boulangerie et de pâtisserie (10) de grande taille peuvent également être placés sur des éléments porteurs (12) par une personne de commande, le cas échéant, sur des éléments porteurs (12) présentant une taille géométrique différente de celles des éléments porteurs (12) pour les petits produits de boulangerie et de pâtisserie (9).

12. Procédé selon l'une des revendications de procédé précédentes, **caractérisé en ce que** les produits de boulangerie et de pâtisserie (9, 10) d'un élément porteur (12) respectifs sont traités et transportés dans le maintien permanent de leur position relative les uns par rapport aux autres lors de la cuisson au four et jusqu'à l'appel par le client au dispositif de distribution (23).

13. Procédé selon l'une des revendications de procédé précédentes, **caractérisé en ce que** plusieurs éléments porteurs (12) sont simultanément mis à disposition à un poste de chargement (46) du dispositif de chargement (17), de préférence les uns au-dessus des autres.

14. Procédé selon l'une des revendications de procédé précédentes, **caractérisé en ce que** des informations sur le type, la quantité ou le moment du débit des produits de boulangerie et de pâtisserie sont enregistrées, sachant que ces informations sont de préférences analysées et les résultats utilisés pour la commande du dispositif.

15. Procédé selon l'une des revendications de procédé précédentes, **caractérisé en ce que** les substances odorantes générées lors de la cuisson au four sont au moins temporairement refoulées avec l'air ambiant dans l'espace de vente.
